(19) Europäisches Patentamt
European Patent Office
Office européen des brevets

(11) **EP 4 679 922 A1**

(12) **EUROPEAN PATENT APPLICATION**
published in accordance with Art. 153(4) EPC

(43) Date of publication:
**14.01.2026 Bulletin 2026/03**

(51) International Patent Classification (IPC):
**H04W 72/40** (2023.01)

(21) Application number: **24784064.8**

(52) Cooperative Patent Classification (CPC):
**H04L 5/00; H04W 72/0446; H04W 72/0453; H04W 72/25; H04W 72/40**

(22) Date of filing: **19.03.2024**

(86) International application number:
**PCT/CN2024/082506**

(87) International publication number:
**WO 2024/207979 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 CN 202310411085**

(71) Applicant: **Huawei Technologies Co., Ltd.**
**Shenzhen, Guangdong 518129 (CN)**

(72) Inventors:
• **YI, Feng**
**Shenzhen, Guangdong 518129 (CN)**
• **MI, Xiang**
**Shenzhen, Guangdong 518129 (CN)**
• **QI, Hong**
**Shenzhen, Guangdong 518129 (CN)**
• **SU, Hongjia**
**Shenzhen, Guangdong 518129 (CN)**

(74) Representative: **Maiwald GmbH**
**Engineering**
**Elisenhof**
**Elisenstrasse 3**
**80335 München (DE)**

(54) **RESOURCE INDICATION METHOD AND APPARATUS**

(57) A resource indication method and an apparatus are provided, and are applicable to the field of V2X, intelligent driving, the internet of vehicles, assisted driving, autonomous driving, and the like. The method includes: One resource block set includes $N_{subCH}$ sub-channels, and one sub-channel includes k interlaced resources. A first terminal device receives first indication information from a second terminal device, where the first indication information indicates L sub-channels included in a first resource, and L is an integer greater than 0. The first terminal device determines, based on the L sub-channels, at least one interlaced resource included in the first resource, where the at least one interlaced resource and the L sub-channels meet a mapping relationship. According to the method in this application, although the first indication information indicates the sub-channel, the first terminal device may determine, based on the mapping relationship, an interlaced resource mapped to the sub-channel, so that data can be transmitted on the interlaced resource. An actually indicated resource can be determined based on the mapping relationship without changing a resource indication manner.

FIG. 6

**Description**

CROSS-REFERENCE TO RELATED APPLICATIONS

This application claims priority to Chinese Patent Application No. 202310411085.1, filed with the China National Intellectual Property Administration on April 7, 2023 and entitled "RESOURCE INDICATION METHOD AND APPARATUS, which is incorporated herein by reference in its entirety.

TECHNICAL FIELD

This application relates to the field of communication technologies, and in particular, to a resource indication method and an apparatus.

BACKGROUND

The 3rd Generation Partnership Project (the 3rd generation partnership project, 3GPP) defines a sidelink (sidelink, SL) communication technology, and a typical application scenario includes vehicle-to-everything (vehicle-to-everything, V2X). An important evolution direction of SL communication is to use SL communication in an unlicensed (unlicensed) spectrum, and this part of technologies may be collectively referred to as SL-unlicensed (SL-unlicensed, SL-U) communication.

A time-frequency resource for SL communication is configured based on an SL communication resource pool, and the SL communication resource pool is a set of time resources and frequency resources used for SL communication. The resource pool includes a plurality of physical resource blocks (resource block, RB), and the RBs in the resource pool may be divided into a plurality of sub-channels (sub-channel) or interlaced (interlace) resources.

In V2X, one terminal device may indicate a physical sidelink shared channel (physical sidelink shared channel, PSSCH) resource to another terminal device via sidelink control information (sidelink control information, SCI), and resource indication information may indicate information about a sub-channel occupied by sidelink information, for example, indicate an index of a start sub-channel occupied by a sidelink resource and a length of the sub-channel. If the resource pool is divided into the plurality of interlaced resources, when the resource indication information indicates the information about the sub-channel occupied by the sidelink information, how the terminal device determines an interlaced resource occupied by the sidelink information is an urgent problem to be resolved.

SUMMARY

This application provides a resource indication method and an apparatus, so that a terminal device can determine, based on resource indication information, an interlaced resource included in a resource.

According to a first aspect, this application provides a resource indication method. The method is performed by a terminal device or a module or chip in the terminal device. An example in which the method is performed by a first terminal device is used for description herein. The method includes: The first terminal device determines a resource pool based on configuration information, where the resource pool includes $R_{RBset}$ resource block sets, $R_{RBset}$ is an integer greater than or equal to 1, one resource block set includes $N_{subCH}$ sub-channels, one sub-channel includes k interlaced resources, k is an integer greater than or equal to 1, and one resource block set includes M interlaced resources. The first terminal device receives first indication information from a second terminal device, where the first indication information indicates L sub-channels included in a first resource, and L is an integer greater than 0. The first terminal device determines, based on the L sub-channels, at least one interlaced resource included in the first resource, where the at least one interlaced resource and the L sub-channels meet a mapping relationship.

According to the method in this application, although the first indication information indicates the sub-channel, the first terminal device may determine, based on the mapping relationship, an interlaced resource mapped to the sub-channel, so that data can be transmitted on the interlaced resource. Although the resource pool is divided based on the interlaced resource, a resource actually indicated by the first indication information can still be determined based on the mapping relationship without changing a resource indication manner. This improves system compatibility.

In a possible design, the mapping relationship includes: The $R_{RBset}$ resource block sets include a first resource block set and a second resource block set. The first resource block set includes a sub-channel whose index is $N_{subCH,n'}$ and indexes of k interlaced resources included in the sub-channel whose index is $N_{subCH,n'}$ are the same as indexes of k interlaced resources included in a sub-channel whose index is $N_{subCH,n'}$ in the second resource block set.

In the foregoing method, based on the mapping relationship, indexes of interlaced resources and quantities of interlaced resources mapped to sub-channels with a same index in different RB sets need to be the same, so that a problem such as uneven power or a peak to average power ratio (peak to average power ratio, PAPR) can be avoided. This improves system efficiency.

In a possible design, the sub-channel whose index is $N_{subCH,n'}$ in the first resource block set includes the k interlaced resources whose indexes are $m_0$, $(m_0 + 1) \bmod M$, ..., and $(m_0 + k - 1) \bmod M$; and the sub-channel whose index is $N_{subCH,n'}$ in the second resource block set includes the k interlaced resources whose indexes are $m_0$, $(m_0 + 1) \bmod M$, ..., and $(m_0 + k - 1) \bmod M$.

In a possible design, the k interlaced resources included in the sub-channel whose index is $N_{subCH,n'}$ in the first resource block set are determined based on a third resource block set in the $R_{RBset}$ resource block sets.

In a possible design, the third resource block set is a resource block set at a lowest frequency domain position in the resource pool; or the third resource block set is a resource block set with a lowest resource block set index in the resource pool.

In a possible design, a sub-channel with a smallest index in the third resource block set includes a resource block at a lowest frequency domain position in the third resource block set; or a sub-channel with a smallest index in the third resource block set includes an interlaced resource with a smallest index in the third resource block set.

In a possible design, the mapping relationship includes: An index of a sub-channel to which an interlaced resource whose index is m is mapped in the resource pool or any one of the $R_{RBset}$ resource block sets meets the following form:

[floor((m+delta1)/k)+delta2] mod $N_{subCH}$ or [ceil((m+delta1)/k)+delta2] mod $N_{subCH}$.

Herein, delta1 and delta2 are predefined, preconfigured, or configured by a network device, floor is a rounding down operation, ceil is a rounding up operation, and mod is a modulo operation.

In a possible design, the mapping relationship includes: For any one of the $R_{RBset}$ resource block sets, a sub-channel with a smallest index in the resource block set includes k resource blocks with a smallest index in the resource block set; or a sub-channel with a smallest index in the resource block set includes k interlaced resources corresponding to k resource blocks with a smallest index in the resource block set; or a sub-channel with a smallest index in the resource block set includes a resource block at a lowest frequency domain position in the resource block set; or a sub-channel with a smallest index in the resource block set includes an interlaced resource with a smallest index in the resource block set.

In the foregoing mapping relationship, mapping between sub-channels and interlaced resources in resource block sets may be different, so that implementation is flexible, and resource utilization is increased.

In a possible design, the mapping relationship includes: a sub-channel with a smallest index in an $R_{RBset,r}^{th}$ resource block set includes a lowest frequency domain resource block position in the $R_{RBset,r}^{th}$ resource block set, where r is any integer from 0 to $R_{RBset}-1$.

In a possible design, the mapping relationship includes: The first indication information indicates that the first resource occupies sub-channels $N_{subCH,n'}$ in an $R_{RBset,r}^{th}$ resource block set and in an $R_{RBset,r'+1}^{th}$ resource block set.

The first terminal device determines, based on the first indication information, that the first resource occupies interlaced resources whose indexes are $m_0$, $(m_0 + 1) \bmod M$, ..., and $(m_0 + k - 1) \bmod M$ and that are included in the $R_{RBset,r''}^{th}$ resource block set and the $R_{RBset,r'+1}^{th}$ resource block set.

In a possible design, a sub-channel $N_{subCH,n'}$ in the $R_{RBset,r}^{th}$ resource block set includes interlaced resources whose indexes are $m_0$, $(m_0 + 1) \bmod M$, ..., and $(m_0 + k - 1) \bmod M$.

A sub-channel $N_{subCH,n'}$ in the $R_{RBset,r'+1}^{th}$ resource block set includes interlaced resources whose indexes are $m_1$, $(m_1 + 1) \bmod M$, ..., and $(m_1 + k - 1) \bmod M$.

In a possible design, for a first resource block set in the plurality of resource block sets, an index of a sub-channel to which an interlaced resource whose index is m is mapped in the first resource block set meets the following form:

$$[\text{floor}((m-m_{RBset,i}+M+N_{RB-set}^{offset})/k)+delta3] \bmod N_{subCH}; \text{ or}$$

$$[\text{ceil}((m - m_{RBset,i}+M+N_{RB-set}^{offset})/k)+delta3] \bmod N_{subCH}; \text{ or}$$

$$[\text{floor}((m-m_{RBset,i}+N_{RB-set}^{offset})/k)+delta3] \bmod N_{subCH}; \text{ or}$$

$$[\text{ceil}((m - m_{RBset,i}+N_{RB-set}^{offset})/k)+delta3] \bmod N_{subCH}.$$

Herein, an index of an interlaced resource in which a resource block with a smallest index in the first resource block set is located is $m_{RBset,i}$, $N_{RB-set}^{offset}$ and delta3 are predefined, preconfigured, or configured by a network device, floor is a rounding down operation, ceil is a rounding up operation, and mod is a modulo operation.

In a possible design, the resource pool or the SL BWP further includes at least one guard band, and one guard band is located between two adjacent resource block sets in the plurality of resource block sets.

A result of a modulo operation between a sum of a quantity of resource blocks included in the first resource block set and a quantity of resource blocks included in a first guard band and the quantity corresponding to the plurality of interlaces is 0; and the first guard band is a guard band that is in the at least one guard band and that is adjacent to the first resource block set.

Quantities of RBs in the RB set and in the guard band are configured according to the foregoing method, so that any two of the plurality of RB sets in the resource pool can correspond to sub-channels with a same index, and indexes of k interlaced resources corresponding to one of the sub-channels can be the same as those corresponding to the other of the sub-channels. According to this method, during cross-RB-set transmission, a problem such as a peak to average power ratio or uneven power in a data transmission process caused by different indexes of interlaced resources occupied by sub-channels with a same index can be avoided.

In a possible design, the first indication information further indicates P resource block sets, and a resource block included in the first resource is located in the P resource block sets, where P is an integer greater than or equal to 1.

According to a second aspect, this application provides a resource indication method. The method is performed by a terminal device or a module or chip in the terminal device. An example in which the method is performed by a second terminal device is used for description herein. The method includes: A second terminal device determines a first resource, where the first resource includes at least one interlaced resource, the at least one interlaced resource is located in a resource pool, the resource pool includes $R_{RBset}$ resource block sets, $R_{RBset}$ is an integer greater than or equal to 1, one resource block set includes $N_{subCH}$ sub-channels, one sub-channel includes k interlaced resources, k is an integer greater than or equal to 1, and one resource block set includes M interlaced resources. The second terminal device sends first indication information to a first terminal device, where the first indication information indicates L sub-channels included in the first resource, L is an integer greater than 0, and the at least one interlaced resource and the L sub-channels meet a mapping relationship.

For other content of the second aspect, refer to the descriptions of the first aspect. Details are not described herein again.

According to a third aspect, this application further provides a communication apparatus. The communication apparatus can implement any method provided in the first aspect or the second aspect. The communication apparatus may be implemented by hardware, or may be implemented by hardware executing corresponding software. The hardware or the software includes one or more units or modules corresponding to the foregoing functions.

In a possible design, the communication apparatus includes a processor, and the processor is configured to support the communication apparatus in performing a corresponding function performed by the first terminal device or the second terminal device in the foregoing method. The communication apparatus may further include a memory. The memory may be coupled to the processor, and store program instructions and data that are necessary for the communication apparatus. Optionally, the communication apparatus further includes an interface circuit. The interface circuit is configured to support communication between the communication apparatus and a device like a terminal apparatus.

In a possible design, the communication apparatus includes corresponding functional modules that are respectively configured to implement the steps in the foregoing method. The function may be implemented by hardware, or may be implemented by hardware executing corresponding software. The hardware or the software includes one or more modules corresponding to the foregoing functions.

In a possible design, a structure of the communication apparatus includes a processing unit, a sending unit, and a receiving unit. These units may perform corresponding functions in the foregoing method examples. For details, refer to the descriptions in the method provided in any one of the first aspect to the fifth aspect. Details are not described herein again.

According to a fourth aspect, an embodiment of this application further provides a communication apparatus. The communication apparatus includes a module/unit for performing any method provided in the first aspect or the second aspect. These modules/units may be implemented by hardware, or may be implemented by hardware executing corresponding software.

According to a fifth aspect, an embodiment of this application provides a communication apparatus, including a memory and a processor. The processor is configured to execute a computer program or instructions stored in the memory, so that the communication apparatus implements any method provided in the first aspect or the second aspect.

According to a sixth aspect, an embodiment of this application further provides a computer-readable storage medium. The computer-readable storage medium includes a computer program. When the computer program is run on a communication apparatus, the computer-readable storage medium is caused to implement any method provided in the first aspect or the second aspect.

According to a seventh aspect, an embodiment of this application further provides a computer program product. When the computer program product runs on a communication apparatus, the communication apparatus is caused to implement the method in any one of the first aspect, the second aspect, or the possible designs of the first aspect and the second aspect.

According to an eighth aspect, a chip is provided. The chip includes a processor, further includes a memory, and is configured to implement the method in any one of the first aspect and the second aspect and the possible implementations of the first aspect and the second aspect. The chip may include a chip, or may include a chip and another discrete device.

According to a ninth aspect, a communication system is provided, including a terminal device and a network device.

A first terminal device is configured to implement the method in any one of the first aspect and the possible implementations of the first aspect. The second terminal device is configured to implement the method in any one of the second aspect and the possible implementations of the second aspect.

These or other aspects of this application are more concise and easier to understand in descriptions of the following embodiments.

BRIEF DESCRIPTION OF DRAWINGS

FIG. 1(a) is a diagram of a network architecture of a mobile communication system applicable to an embodiment of this application;
FIG. 1(b) is a diagram of a network architecture of a mobile communication system applicable to an embodiment of this application;
FIG. 1(c) is a diagram of a network architecture of a mobile communication system applicable to an embodiment of this application;
FIG. 2 is a diagram of a resource pool according to an embodiment of this application;
FIG. 3 is a diagram of a resource pool according to an embodiment of this application;
FIG. 4 is a diagram of interlaced resources according to an embodiment of this application;
FIG. 5 is a diagram of sub-channels according to an embodiment of this application;
FIG. 6 is a schematic flowchart of a resource indication method according to an embodiment of this application;
FIG. 7 is a diagram of a mapping relationship between a sub-channel and an interlaced resource according to an embodiment of this application;
FIG. 8 is a diagram of a mapping relationship between a sub-channel and an interlaced resource according to an embodiment of this application;
FIG. 9 is a diagram of a mapping relationship between a sub-channel and an interlaced resource according to an embodiment of this application;
FIG. 10 is a diagram of a mapping relationship between a sub-channel and an interlaced resource according to an embodiment of this application;
FIG. 11 is a diagram of a mapping relationship between a sub-channel and an interlaced resource according to an embodiment of this application;
FIG. 12 is a diagram of a resource configuration according to an embodiment of this application;
FIG. 13 is a diagram of a structure of a communication apparatus according to an embodiment of this application;
FIG. 14 is a diagram of a structure of a communication apparatus according to an embodiment of this application; and
FIG. 15 is a diagram of a structure of a communication apparatus according to an embodiment of this application.

DESCRIPTION OF EMBODIMENTS

The following describes in detail embodiments of this application with reference to accompanying drawings of the specification.

A communication method provided in embodiments of this application may be applied to long term evolution (long term evolution, LTE) or a 5th generation (5th generation, 5G) communication system, for example, 5G new radio (new radio, NR), or may be applied to various future communication systems, for example a 6th generation (6th generation, 6G) communication system. The communication method provided in embodiments of this application may be further applied to field of vehicle-to-everything (vehicle to everything, V2X) communication, the internet of vehicles, autonomous driving, assisted driving, and the like.

A method and an apparatus provided in embodiments of this application are based on a same or similar technical concept. Because problem resolving principles of the method and the apparatus are similar, mutual reference may be made to implementations of the apparatus and the method. Repeated descriptions are not described.

The following first describes some terms in embodiments of this application, to facilitate understanding of a person skilled in the art.

In the embodiments of this application, a network device may be a device in a wireless network, and the network device may also be referred to as a network apparatus. For example, the network device may be a radio access network (radio access network, RAN) node that connects the terminal device to the wireless network, and may also be referred to as an access network device. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; or may be a network device in a 5G mobile communication system, for example, a next generation NodeB (next generation NodeB, gNB), a transmission reception point (transmission reception point, TRP), or a TP in an NR system, or one antenna panel or one group of antenna panels (including a plurality of antenna panels) of a base station in the 5G mobile communication system. Alternatively, the network device may be a network node that forms a gNB or a transmission point, for example, a BBU or a distributed unit (distributed unit, DU).

In some deployments, the network device may include a central unit (central unit, CU) and a DU. The network device may further include an active antenna unit (active antenna unit, AAU). The CU implements some functions of the gNB, and the DU implements some functions of the gNB. For example, the CU is responsible for processing a non-real-time protocol and service, to implement functions of a radio resource control (radio resource control, RRC) layer. The DU is responsible for processing a physical layer protocol and a real-time service, to implement functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

The terminal device in embodiments of this application may be a wireless terminal device that can receive scheduling and indication information from the network device. The terminal device may be referred to as a terminal apparatus, and may also be referred to as user equipment (user equipment, UE), a mobile station (mobile station, MS), a mobile terminal (mobile terminal, MT), or the like. The terminal device may be a device that includes a wireless communication function (providing voice/data connectivity to a user), for example, a handheld device, a vehicle-mounted device, or a vehicle-mounted module that has a wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal device, a vehicle-to-everything (vehicle to everything, V2X) communication terminal device, a smart vehicle, an in-vehicle infotainment system (or referred to as a vehicle-mounted sending unit) (telematics box, T-box), a machine-to-machine/machine-type communication (machine-to-machine/machine-type communication, M2M/MTC) terminal device, an internet of things (internet of things, IoT) terminal device, and the like. For example, the terminal device may be a vehicle-mounted device, an entire vehicle device, a vehicle-mounted module, a vehicle, an on board unit (on board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in industrial control may be a camera, a robot, or the like. The wireless terminal in the smart home may be a television, an air conditioner, a sweeper, a speaker, a set-top box, or the like.

In this application, "at least one" means one or more, and "a plurality of" means two or more. The term "and/or" is an association relationship for describing associated objects and represents that three relationships may exist. For example, A and/or B may represent the following three cases: Only A exists, both A and B exist, and only B exists.

In this application, predefined content is usually defined in a standard, does not need to be configured by another device, and is information recorded/written in advance in hardware and/or software of the terminal device, or may be understood as information that cannot be changed by the network device or another terminal device. Pre-configured content is usually information recorded/written in advance in hardware and/or software of the terminal device, is determined by a factory device vendor, and may be changed by software or hardware.

A (pre-) configuration may be classified into a network device (pre-) configuration and a terminal device (pre-) configuration. If a (pre-) configuration is a network device (pre-) configuration, the (pre-) configuration may be performed based on a system information block (system information block, SIB) or RRC signaling. If a (pre-) configuration is a terminal device (pre-) configuration, the (pre-) configuration may be performed based on PC5-RRC signaling.

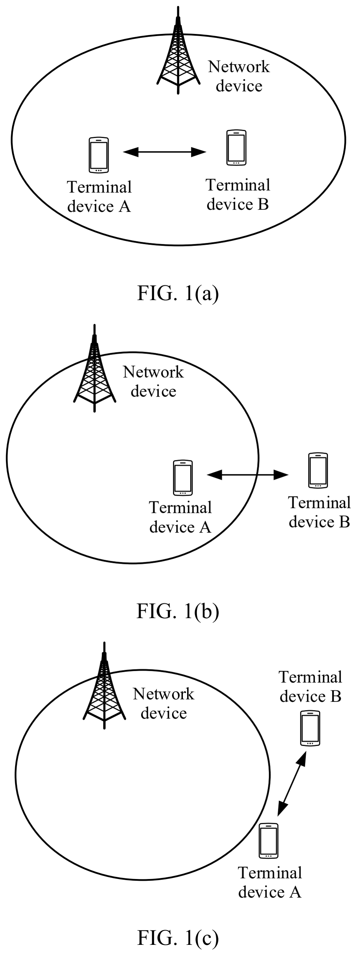

This application is applicable to a scenario in which sidelink communication is supported, and supports a communication scenario with network coverage and a communication scenario without the network coverage. A sidelink may also be referred to as a sidelink, and is referred to as a sidelink in this application. FIG. 1(a) to FIG. 1(c) are diagrams of network architectures applicable to this application. In FIG. 1(a), both a terminal device A and a terminal device B are within signal coverage of a network device. In FIG. 1(b), a terminal device A is within signal coverage of a network device, but a terminal device B is outside the signal coverage of the network device. In FIG. 1(c), both the terminal device A and the terminal device B are out of the signal coverage of the network device.

The terminal device A and the terminal device B in FIG. 1(a) and FIG. 1(b) may communicate with each other through a sidelink by using a resource scheduled by the network device, and the resource may be a licensed resource or a licensed frequency band; or the terminal device A and the terminal device B may perform resource self-selection, that is, select, from a resource pool, a resource for sidelink communication. The resource is an unlicensed resource or an unlicensed frequency band.

Because both the terminal device A and the terminal device B in FIG. 1(c) are outside the signal coverage of the network device, communication can be performed through a sidelink only in the resource self-selection manner.

The following first describes related technical features in embodiments of this application. It should be noted that these explanations are intended to make embodiments of this application easier to understand, but should not be considered as a limitation on the protection scope claimed in this application.

**Communication in an unlicensed spectrum**

In a wireless communication system, spectrum resources may be divided into a licensed spectrum and an unlicensed spectrum. The licensed spectrum can be used only by a specific operator in a place, and the unlicensed spectrum can be used by any operator and is a shared spectrum resource.

The unlicensed spectrum may be used by using technologies such as wireless fidelity (wireless fidelity, Wi-Fi), Bluetooth, and a wireless personal area network (Zigbee). In addition, in a cellular mobile communication technology (for example, a 5G communication technology), research is also performed on introduction of the unlicensed spectrum, for example, an NR unlicensed (NR unlicensed, NR-U) technology.

The communication in the unlicensed spectrum needs to comply with some regulations, for example, listen-before-talk (listen-before-talk, LBT)-based channel access and occupied channel bandwidth (occupied channel bandwidth, OCB) requirements, to ensure access fairness between various devices running in the unlicensed spectrum.

Resource pool (resource pool)

The resource pool may also be referred to as an SL resource pool. Optionally, the resource pool may be preconfigured, or may be configured by a network device. For example, within network coverage, the network device sends resource pool information to a terminal device in a cell via a system information block (system information block, SIB), cell-specific (cell-specific) radio resource control (radio resource control, RRC) signaling, or UE-specific (UE-specific) RRC signaling. The resource pool information indicates the resource pool. Alternatively, the resource pool may be predefined.

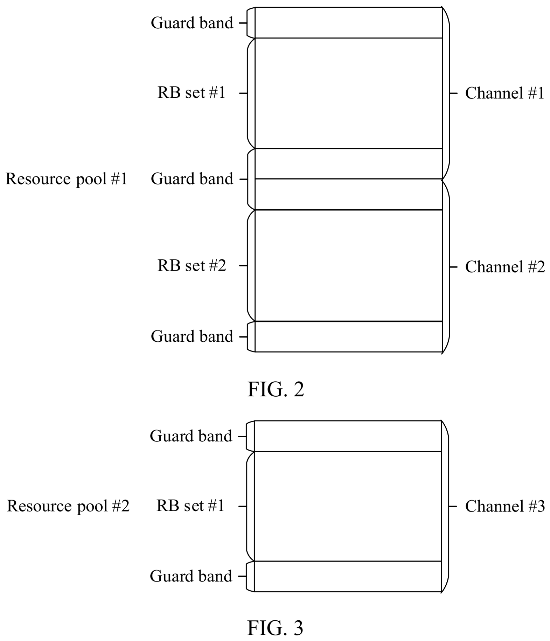

The resource pool may include a bandwidth of one resource block set (RB set), or include a bandwidth of an integer quantity of resource block sets. For example, as shown in FIG. 2, a resource pool #1 may include two channels: a channel #1 and a channel #2. The channel #1 includes an RB set #1, and the channel #2 includes an RB set #2.

As shown in FIG. 3, the resource pool #2 may include one channel, namely, a channel #3; and the channel #3 includes the RB set #1.

For example, a bandwidth of each channel in the resource pool may be 20 MHz, and one channel includes one RB set. Certainly, the bandwidth of the channel may alternatively be another value. This is not specifically limited in this application.

As shown in FIG. 2, the channel #1 includes the RB set #1, and the channel #2 includes the RB set #2. The resource pool #1 includes the RB set #1, the RB set #2, and a guard band (guard band) between the RB set #1 and the RB set #2. Alternatively, the resource pool #1 includes an entire bandwidth of the channel #1 and an entire bandwidth of the channel #2. When a terminal device successfully performs LBT on the two channels: the channel #1 and the channel #2, resources available to the terminal device include not only resources in the RB sets in the two channels, but also the guard band between the two adjacent RB sets.

In an implementation, the resource pool may be further divided into a (pre-) configured quantity of interlaces (interlaces), and the interlaces may also be referred to as interlaced resources. An RB included in the interlace may be referred to as an interlaced RB. For example, that an interlaced resource with an index $m \in \{0, 1, ..., M-1\}$ includes a plurality of common resource blocks (common resource blocks, CRBs) whose indexes are $\{m, M+m, 2M+m, 3M+m, ...\}$ is defined. A quantity of interlaced resources included in an SL BWP and/or an SL resource pool is related to a subcarrier spacing. For example, when the subcarrier spacing is 15 kHz, M=10; or when the subcarrier spacing is 30 kHz, M=5.

The resource pool is located in a bandwidth part (bandwidth part, BWP), that is, the BWP may include a plurality of resource pools. A position of the resource pool in the BWP is preconfigured, or is configured by a network device. During interlaced resource division, RBs in the BWP may be first divided into a plurality of interlaced resources. In this way, there is a mapping relationship between the RB resources in the BWP and the interlaced resources in the BWP. For example,

$$n_{\mathrm{CRB}}^{\mu} = M n_{\mathrm{IRB},m}^{\mu} + N_{\mathrm{BWP},i}^{\mathrm{start},\mu} + \left( \left( m - N_{\mathrm{BWP},i}^{\mathrm{start},\mu} \right) \bmod M \right).$$

Herein, $n_{\mathrm{CRB}}^{\mu}$ represents a common resource block index, M is a quantity of interlaces included in the BWPi, $n_{\mathrm{IRB},m}^{\mu}$ represents an interlaced RB index, $n_{\mathrm{IRB},m}^{\mu} \in \{0,1,...\}$, $N_{\mathrm{BWP},i}^{\mathrm{start},\mu}$ represents a start common resource block in the BWP relative to a common resource block 0, and m is an interlaced resource index in the BWPi.

In this way, an interlaced resource to which each RB included in the resource pool in the BWP belongs is determined. This may also be understood as that before the resource pool is configured in the BWP, interlaced resource division has been completed for the BWP, and after the BWP configuration is determined, indexes of interlaced resources in the BWP may also be determined, so that an index of an interlaced resource to which each RB in an RB set in the resource pool belongs is determined.

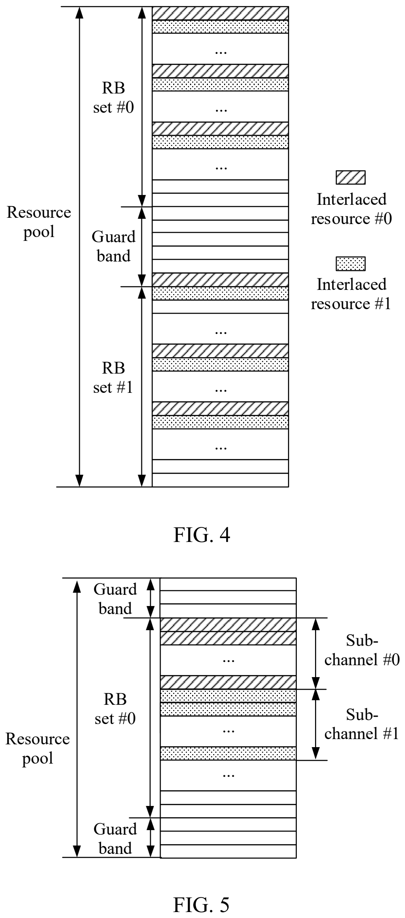

For example, as shown in FIG. 4, the resource pool includes an RB set #0 and an RB set #1, and a guard band is included between the RB set #0 and the RB set #1. When the subcarrier spacing is 15 kHz, each of the RB set #0 and the RB set #1 includes 105 RBs, and a quantity M of interlaced resources is 10, it is assumed that an index of a resource block with a smallest index in the RB set #0 is 0. Indexes of resource blocks included in an interlaced resource with an index #0 in the RB set #0 are {0, 10, 20, 30, ..., 100}, and indexes of resource blocks included in an interlaced resource with an index #1 in the RB set #0 are {1, 11, 21, 31, ..., 101}. Other cases can be deduced by analogy. It should be noted that, in one resource block set, different interlaced resources may include different quantities of interlaced RBs. For example, in the example in FIG. 4, an interlaced resource with an index #0 includes 11 interlaced RBs, and an interlaced resource with an index #9 includes 10 interlaced RBs.

In an implementation, the resource pool may be further divided into a (pre-) configured quantity of sub-channels (subchannel). One sub-channel includes a group of contiguous RBs, and a sub-channel size may be represented by a quantity of RBs included in the sub-channel.

In this implementation, a plurality of contiguous resource blocks may be divided into one sub-channel, and resource blocks in one resource pool are divided into M sub-channels. In this implementation, the resource blocks included in the sub-channel are contiguous. It is assumed that an index of one sub-channel is m, $m \in \{0,1, ... , M\text{-}1\}$, an index of a start resource block of the resource pool is $n_{start}$, and a quantity of PRBs included in the sub-channel is represented by $n_{subCHsize}$. In this case, indexes of contiguous $n_{subCHsize}$ resource blocks included in the sub-channel m in the resource pool are $n_{PRB} = n_{start} + m \cdot n_{subCHsize} + j$, and $j = 0, 1, \cdots, n_{subCHsize}\text{-}1$. For example, as shown in FIG. 5, when a subcarrier spacing is 15 kHz, an RB set #0 includes 110 RBs. When a quantity of sub-channels is 10, it is assumed that an index of a resource block with the smallest index in the RB set #0 is 0. Indexes of resource blocks included in a sub-channel with an index #0 in the RB set are {0, 1, 2, 3, ..., 10}, and indexes of resource blocks included in a sub-channel with an index #1 in the RB set are {11, 12, 13, ..., 21}. Other cases are deduced by analogy.

In a scenario in which one resource pool includes a plurality of RB sets, and RBs in the resource pool are divided into a plurality of interlaced resources, a manner of numbering sub-channel indexes is as follows: An RB resource in one sub-channel is limited to one RB set, the sub-channel in the RB set is first numbered in the RB set, and then sub-channels are periodically numbered in different RB sets. In other words, RB sets in the resource pool include (or correspond to) a same quantity of sub-channels, and indexes of the sub-channels in the RB sets in the resource pool are the same. For example, a total of five sub-channels are included. The resource pool includes an RB set #1 and an RB set #2. In the RB set #1, indexes of five sub-channels are respectively 0, 1, 2, 3, and 4. In the RB set #2, indexes of five sub-channels are respectively 0, 1, 2, 3, and 4. Indexes of sub-channels in each RB set may be numbered from 0. In addition, in an implementation, sub-channels that have a same index and that are in different RB sets include a same quantity of RBs.

Currently, PSCCH and/or PSSCH resource allocation is performed at a basic frequency domain granularity of a sub-channel. However, a resource in a resource pool may be divided by using a structure of an interlaced resource. In view of this, this application provides a method, so that when related information of a sub-channel occupied by a PSSCH resource is indicated, a terminal device can determine, based on SCI, an interlaced resource included in the PSCCH resource and/or an interlaced resource included in a PSSCH resource.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to a similar technical problem.

In embodiments of this application, an NR network scenario in a wireless communication network is used as an example to describe some scenarios. It should be noted that the solutions in embodiments of this application may further be applied to another wireless communication network, and a corresponding name may also be replaced with a name of a corresponding function in the another wireless communication network.

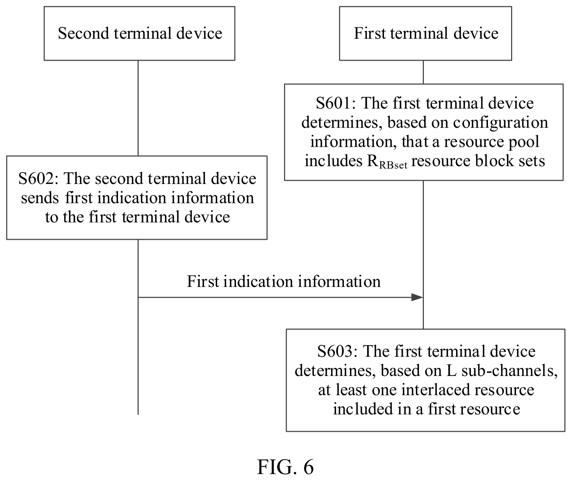

FIG. 6 is a schematic flowchart of a resource indication method according to an embodiment of this application. When a procedure of the method is applied to the system shown in FIG. 1(a) to FIG. 1(c), the network device or a module or chip in the network device in FIG. 1(a) to FIG. 1(c) may perform the method performed by a network device in the following procedure, a first terminal device or a module or chip in the first terminal device in FIG. 1(a) to FIG. 1(c) may perform the method performed by a terminal device in the following procedure, and a second terminal device or a module or chip in the second terminal device in FIG. 1(a) to FIG. 1(c) may perform the method performed by a terminal device in the following procedure. The following uses only the first terminal device and the second terminal device as an example for description. It may be understood that a specific structure of an execution body of the method provided in embodiments of this application is not particularly limited in the following embodiments, provided that communication can be performed according to the method provided in embodiments of this application by running a program that records code of the method provided in embodiments of this application.

S601: The first terminal device determines a resource pool based on configuration information.

The second terminal device may alternatively determine the resource pool based on the configuration information.

The configuration information may be from the network device, or may be predefined or preconfigured. This is not limited in this application. $R_{RBset}$ is an integer greater than or equal to 1.

In an implementation, for example, the resource pool includes $R_{RBset}$ resource block sets. In this case, the resource pool includes $N_{RB-set}$ - 1 guard bands, and the configuration information may indicate a start position and a size of the guard band (a quantity of RBs included in the guard band) of each of the $N_{RB-set}$ - 1 guard bands. The configuration information may further indicate a quantity of RBs included in each resource block set. After determining a position of each guard band in the resource pool, the terminal device may determine a position of each resource block set in the resource pool based on the quantity of RBs included in each resource block set.

In this application, the resource pool includes the $R_{RBset}$ resource block sets, and each RB set in the resource pool includes (or corresponds to) $N_{subCH}$ sub-channels, where $N_{subCH}$ is an integer greater than or equal to 1. Each RB set in the resource pool includes (or corresponds to) M interlaced resources. One sub-channel includes k interlaced resources, where k is an integer greater than or equal to 1. Values of $N_{subCH}$ and k may be predefined or preconfigured, or may be configured by the network device. $M=N_{subCH} \times k$.

Each RB set in the resource pool includes (or corresponds to) M interlaced resources, and indexes of the interlaced resources may be values in {0, 1, ..., M-1}. Each sub-channel corresponds to a same quantity of interlaced resources.

That one RB set includes (or corresponds to) M interlaced resources may mean that RBs included in the RB set are distributed in the M interlaced resources, and a value of M is predefined, preconfigured, or configured by a network device. In an implementation, the value of M is related to a subcarrier spacing of a BWP in which the RB set is located.

That one sub-channel includes k interlaced resources may also mean that the k interlaced resources are mapped to the one sub-channel. To be specific, in one RB set, if the RB set is divided into a plurality of sub-channels, an RB included in one sub-channel may be an RB included in k interlaced resources that are included in (or mapped to) the sub-channel in the RB set. For example, indexes of 10 resource blocks included in the RB set in an interlaced resource with an index #0 in the RB set are {0, 10, 20, 30, ..., 100}, and indexes of 10 resource blocks included in the RB set in an interlaced resource with an index #1 in the RB set are {1, 11, 21, 31, ..., 101}. If a sub-channel #0 includes an interlaced resource #0 and an interlaced resource #1, in the RB set, the sub-channel #0 includes a total of 20 resource blocks belonging to the interlaced resource #0 and the interlaced resource #1, and indexes of the 20 resource blocks are {0, 10, 20, 30, ..., 100} and {1, 11, 21, 31, ..., 101}, or are {0, 1, 10, 11, 20, 21, 30, 31, ..., 100, 101}.

S602: The second terminal device sends first indication information to the first terminal device.

Correspondingly, the first terminal device receives the first indication information from the second terminal device.

The first indication information may be carried in SCI, or may be carried in another message. This is not limited in this application.

In an implementation, the first indication information indicates L sub-channels included in a first resource. Before sending the first indication information, the second terminal device may determine the first resource in the resource pool. The second terminal device may determine at least one interlaced resource included in the first resource, and determine, based on a mapping relationship between a sub-channel and an interlaced resource, L sub-channels to which the at least one interlaced resource is mapped. Therefore, the second terminal device may indicate, via the first indication information, the L sub-channels included in the first resource.

The L sub-channels may be sub-channels with contiguous indexes, that is, indexes of the L sub-channels are contiguous, where L is an integer greater than or equal to 1.

In an implementation, the first indication information may indicate the indexes of the L sub-channels included in the first resource.

In this implementation, the first indication information may include the indexes of the L sub-channels.

In an implementation, the first indication information may indicate an index of a start sub-channel in the L sub-channels included in the first resource and a value of L.

In this implementation, the first indication information may include a resource indicator value (resource indicator value, RIV), and the RIV may indicate the index of the start sub-channel in the L sub-channels included in the first resource and the value of L.

For example, if the index of the start sub-channel in the L sub-channels is $n_0$, a value of the RIV is defined as follows:

$$\text{If } (L{-}1) \leq \lfloor M/2 \rfloor, \text{RIV}=M(L{-}1)+n_0.$$

$$\text{If } (L{-}1) > \lfloor M/2 \rfloor, \text{RIV}=M(M{-}L{+}1)+(M{-}1{-}n0).$$

In this implementation, one RIV may indicate both the index of the start sub-channel in the L sub-channels and the value of L. This can reduce signaling overheads.

In an implementation, the first indication information may further indicate an RB set to which a resource block included in the first resource belongs in the resource pool.

If the resource pool includes a plurality of RB sets, and the first resource includes RBs in P RB sets in the plurality of RB sets, that is, the RBs included in the first resource are located in the P RB sets. The first indication information further indicates an index of each of the P RB sets, or the first indication information further indicates an index of a start RB set in the P RB sets and a value of P, where P is an integer greater than or equal to 1. When P is greater than 1, the RBs included in the first resource are a set of RBs included in the L sub-channels in each of the P RB sets.

If indexes of L sub-channels occupied (or corresponding to) by the first resource in one of the P RB sets are the same as those in another of the PRB sets, and are all the indexes of the L sub-channels indicated by the first indication information, the first indication information may include only the indexes of the L sub-channels, or include only one RIV.

If the first resource may correspond to different indexes of L sub-channels in all the P RB sets, the first indication information may include P pieces of sub-information, one piece of sub-information corresponds to one RB set, and one piece of sub-information indicates one RB set and L sub-channels in the RB set. For example, the first indication information includes P RIVs, and each RIV corresponds to one of the P RB sets. Alternatively, the first indication information may include P groups of sub-channel indexes, each group of sub-channel indexes corresponds to one of the P RB sets, and each group of sub-channel indexes includes indexes of L sub-channels.

For example, it is assumed that the RBs included in the first resource are RBs included in two sub-channels whose indexes are 0 and 1 in an RB set #1 in the resource pool, and RBs included in two sub-channels whose indexes are 0 and 1 in an RB set #2 in the resource pool. In this case, the indexes of the L sub-channels indicated by the first indication information are 0 and 1. In this case, the first indication information may indicate the RB set #1 and the RB set #2, or may not indicate the RB set #1 and the RB set #2, or may indicate the start RB set #1 and two contiguously occupied RB sets.

For example, it is assumed that the RBs included in the first resource are RBs included in two sub-channels whose indexes are 0 and 1 in the RB set #1 in the resource pool, and RBs included in two sub-channels whose indexes are 1 and 2 in the RB set #2 in the resource pool. In this case, the first indication information may include a first RIV, and/or an index of the RB set #1; and a second RIV, and/or an index of the RB set #2. The first RIV indicates two sub-channels whose indexes are 0 and 1, and the second RIV indicates two sub-channels whose indexes are 1 and 2.

In an implementation, the first indication information includes a two-level frequency domain resource indicator value (Frequency resource indicator value, FRIV). For example, the first indication information includes X+Y bits, where X bits indicate the L sub-channels occupied by the first resource, and Y bits indicate the P resource block sets occupied by the first resource. The FRIV indicates a currently received resource occupied by a PSCCH/PSSCH and a resource reserved for the future. For example, the FRIV represents sub-channel occupation, and a definition of the FRIV is as follows:

If a maximum quantity of reserved resources *sl-MaxNumPerReserve* is 2,

$$FRIV = n_{subCH,1}^{start} + \sum_{i=1}^{L_{\text{subCH}}-1}\left(N_{\text{subchannel}}^{SL} + 1 - i\right).$$

If a maximum quantity of reserved resources *sl-MaxNumPerReserve* is 3,

$$FRIV = n_{subCH,1}^{start} + n_{subCH,2}^{start} \cdot \left( N_{\text{subchannel}}^{SL} + 1 - L_{\text{subCH}} \right) + \sum_{i=1}^{L_{\text{subCH}}-1} \left( N_{\text{subchannel}}^{SL} + 1 - i \right)^2.$$

Herein, $n_{subCH,1}^{start}$ represents a start sub-channel of a second resource, $n_{subCH,2}^{start}$ represents a start sub-channel or a start RB set index of a third resource, $N_{\text{subchannel}}^{SL}$ represents a quantity of sub-channels in a resource pool, and is provided via a higher-layer parameter sl-NumSubchannel; and $L_{\text{subCH}}$ represents a quantity of sub-channels occupied by a current resource.

When the FRIV represents RB set occupation, the definition of the FRIV is similar, and the sub-channel parameter is replaced with an RB set parameter.

S603: The first terminal device determines, based on the L sub-channels, at least one interlaced resource included in the first resource, where the at least one interlaced resource and the L sub-channels meet a mapping relationship.

The first terminal device may determine, based on the mapping relationship between the sub-channel and the interlaced resource, the at least one interlaced resource mapped to the L sub-channels indicated by the first indication information, to determine the at least one interlaced resource included in the first resource. The first terminal device may perform data transmission in an RB included in the at least one interlaced resource.

In another implementation, the first terminal device may alternatively determine, based on the L sub-channels indicated by the first indication information, an interlaced RB included in the first resource in the resource pool. The interlaced RB included in the first resource in the resource pool and the L sub-channels meet a mapping relationship.

Correspondingly, the first terminal device may determine, based on a mapping relationship between a sub-channel and an RB, at least one RB mapped to the L sub-channels indicated by the first indication information, and the first terminal device may perform data transmission in the at least one RB.

In this application, the mapping relationship may be implemented in a plurality of manners. Descriptions are separately provided below.

Implementation 1: The mapping relationship includes: If the resource pool includes a plurality of RB sets, for any two of the plurality of RB sets, each of sub-channels with a same index in the two RB sets also corresponds to same indexes of k interlaced resources. It may be understood as follows: A mapping relationship between a sub-channel and an interlaced resource in one RB set in the plurality of RB sets is repetition or duplication of a mapping relationship between a sub-channel and an interlaced resource in another RB set in the plurality of RB sets.

With reference to the foregoing descriptions, in a possible implementation, the mapping relationship may be represented as follows.

The $R_{RBset}$ RB sets in the resource pool include a first RB set and a second RB set, and the first RB set and the second RB set are any two RB sets in the $R_{RBset}$ RB sets. The first RB set includes a sub-channel whose index is $N_{subCH,n'}$ and indexes of k interlaced resources included in the sub-channel whose index is $N_{subCH,n}$ are the same as indexes of k interlaced resources included in a sub-channel whose index is $N_{subCH,n'}$ in the second RB set. For example, the sub-channel whose index is $N_{subCH,n'}$ in the first RB set includes the k interlaced resources whose indexes are $m_0, (m_0 + 1) \, mod \, M, ...,$ and $(m_0 + k - 1) \, mod$ M, where $m_0$ represents an index of an interlaced resource with a smallest index in the k interlaced resources. Correspondingly, the sub-channel whose index is $N_{subCH,n'}$ in the second RB set includes the k interlaced resources whose indexes are $m_0, (m_0 + 1) \, mod \, M, ...,$ and $(m_0 + k - 1) \, mod \, M$. It should be understood that, when k=1, the sub-channel whose index is $N_{subCH,n'}$ in the first RB set includes one interlaced resource whose index is $m_0$, and the sub-channel whose index is $N_{subCH,n'}$ in the second RB set includes one interlaced resource whose index is $m_0$.

In this application, when one resource pool includes a plurality of RB sets, the k interlaced resources included in the sub-channel whose index is $N_{subCH,n'}$ in the first RB set are determined based on a third RB set in the $R_{RBset}$ RB sets. In other words, a mapping relationship between a sub-channel and an interlaced resource in another RB set in the resource pool may be determined based on a mapping relationship between a sub-channel and an interlaced resource in the third RB set in the resource pool. That is, the mapping relationship between the sub-channel and the interlaced resource in the another RB set is duplication or repetition of the mapping relationship between the sub-channel and the interlaced resource in the third RB set.

In this application, an RB at a lowest frequency domain position in the resource pool (or the RB set) may be an RB at a smallest frequency domain position in the resource pool (or the RB set), or may be an RB with a smallest index in the resource pool (or the RB set).

In a possible implementation, the third RB set may be predefined, preconfigured, or configured by the network device.

In a possible implementation, the third RB set includes an RB with a smallest index in the resource pool, or the third RB set is an RB set with a lowest frequency domain position in the resource pool, or the third RB set is an RB set with a lowest RB set index in the resource pool.

The mapping relationship between the sub-channel and the interlaced resource in the third RB set is determined in a plurality of implementations.

In a possible implementation, the mapping relationship between the sub-channel and the interlaced resource in the third RB set may be represented as follows: An index index_sub of a sub-channel to which an interlaced resource whose index is m is mapped in the third RB set (or resource pool) meets the following form:

$$\text{index\_sub} = [\text{floor}((m+\text{delta1})/k) + \text{delta2}] \bmod N_{subCH} \qquad (1), \text{ or}$$

$$\text{index\_sub} = [\text{ceil}((m+\text{delta1})/k) + \text{delta2}] \bmod N_{subCH} \qquad (2).$$

Herein, delta1 and delta2 are predefined, preconfigured, or configured by the network device, and delta1 and delta2 are integers. For example, a value range of delta1 is $-M \leq \text{delta1} \leq M$, a value range of delta2 is $-N_{subCH} \leq \text{delta2} \leq N_{subCH}$, floor is a rounding down operation, ceil is a rounding up operation, and mod is a modulo operation. For example, a mod p represents a remainder obtained by dividing a by p.

When delta1 is equal to 0 and/or delta2 is equal to 0, Formula (1) or (2) may be replaced with any one of the following formulas:

$$\text{index\_sub} = [\text{floor}((m)/k) + \text{delta2}] \bmod N_{subCH} \qquad (3)$$

$$\text{index\_sub} = [\text{ceil}((m)/k) + \text{delta2}] \bmod N_{subCH} \qquad (4)$$

$$\text{index\_sub} = [\text{floor}((m+\text{delta1})/k)] \bmod N_{subCH} \qquad (5)$$

$$\text{index\_sub} = [\text{ceil}((m+\text{delta1})/k)] \bmod N_{subCH} \qquad (6)$$

$$\text{index\_sub} = [\text{floor}((m)/k)] \, N_{subCH} \qquad (7)$$

$$\text{index\_sub} = [\text{ceil}((m)/k)] \bmod N_{subCH} \qquad (8)$$

In another implementation, if there is a mapping relationship between a sub-channel and an RB, the mapping relationship between the sub-channel and the RB may be represented as follows:

$$\text{index\_sub} = [\text{floor}((n_{RB}+m)/k) + \text{delta2}] \bmod N_{subCH} \qquad (9)$$

$$\text{index\_sub} = [\text{ceil}((n_{RB}+m)/k) + \text{delta2}] \bmod N_{subCH} \qquad (10)$$

$$\text{index\_sub} = [\text{floor}((n_{RB}+\text{delta1})/k) + \text{delta2}] \bmod N_{subCH} \qquad (11)$$

$$\text{index\_sub} = [\text{ceil}((n_{RB}+\text{delta2})/k) + \text{delta2}] \bmod N_{subCH} \qquad (12)$$

$$\text{index\_sub} = [\text{floor}(n_{RB}/k) + \text{delta2}] \bmod N_{subCH} \qquad (13)$$

$$\text{index\_sub} = [\text{ceil}(n_{RB}/k) + \text{delta2}] \bmod N_{subCH} \qquad (14)$$

$$\text{index\_sub} = [\text{floor}((n_{RB}+\text{delta1})/k)] \bmod N_{subCH} \qquad (15)$$

$$\text{index\_sub} = [\text{ceil}((n_{RB}+\text{delta2})/k)] \bmod N_{subCH} \qquad (16)$$

$$\text{index\_sub} = [\text{floor}(n_{RB}/k)] \bmod N_{subCH} \qquad (17)$$

$$\text{index\_sub} = [\text{ceil}(n_{RB}/k)] \bmod N_{subCH} \qquad (18)$$

Herein, the resource pool includes $N_{RB,max}$ RB resources. The RB resources in the resource pool are numbered from 0 to $N_{RB,max}$-1. An index of an interlaced resource in which an RB with a smallest index in the resource pool is located is m. For an RB whose index is $n_{RB}$ in the resource pool, an index of a sub-channel to which the RB is allocated meets a relationship in any one of Formula (9) to Formula (18), that is, the index of the sub-channel including the RB meets a relationship in any one of Formula (9) to Formula (18), where $0 \le n_{RB} \le N_{RB,max}$-1.

In this application, the RB with the smallest index in the resource pool (or the RB set) may be an RB at a smallest frequency domain position in the resource pool (or the RB set), or may be an RB at a lowest frequency domain position in the resource pool (or the RB set).

In a possible implementation, if the third RB set includes an RB with a smallest index in the resource pool, or the third RB set is an RB set with a lowest frequency domain position in the resource pool, or the third RB set is an RB set with a lowest RB set index in the resource pool, an interlaced resource in which the RB with the smallest index in the third RB set (namely, the resource pool) is located is allocated to a sub-channel with a smallest index, that is, the interlaced resource in which the RB with the smallest index in the resource pool is located is mapped to the sub-channel with the smallest index in the resource pool.

In the third RB set, RBs included in k interlaced resources (interlaced resources that are mapped to or correspond to the k RBs) are sequentially allocated to the sub-channels in ascending order of indexes of the RBs or in ascending order of indexes of interlaced resources in which the RB with the smallest index is located. To be specific, if an RB whose index is $N_{RB}$ ($0 \le N_{RB} \le N_{RB,max}$) in the third RB set is allocated (or mapped) to a sub-channel whose index is $N_{sub}$ ($0 \le N_{sub} \le N_{subCH}$-1) in the third RB set, an interlaced resource in which the RB whose index is $N_{RB}$ in the third resource block set is located is correspondingly allocated (or mapped) to the sub-channel whose index is $N_{sub}$; and then, the RBs included in the $k$ interlaced resources (interlaces corresponding to the $k$ RBs) are sequentially allocated (or mapped) to the sub-channels based on the RB as a reference point in ascending order of indexes of the RBs. Then, the M interlaced resources in the RB set (in the resource pool) are sequentially allocated to the sub-channels in a sequence in which one sub-channel includes k interlaced resources. A mapping relationship between a sub-channel and an interlaced resource in the third RB set is consistent with a mapping relationship between a sub-channel and an interlaced resource in another RB set in the resource pool.

For example, it is assumed that the index of the interlaced resource in which the RB with the smallest index in the resource pool is located is $m_{min}$. A sub-channel whose index is 0 in the third RB set includes k interlaced resources whose indexes are $m_{min}$, $(m_{min} + 1) \bmod M$, ..., and $(m_{min} + k - 1) \bmod M$; a sub-channel whose index is 1 in the third RB set includes k interlaced resources whose indexes are $(m_{min} + k) \bmod M$, $(m_{min} + k + 1) \bmod M$, ..., and $(m_{min} + 2k - 1) \bmod M$; and by analogy, a sub-channel whose index is i in the third RB set includes k interlaced resources whose indexes are $(m_{min} + i * k) \bmod M$, $(m_{min} + i * k + 1) \bmod M$, ..., and $(m_{min} + (i + 1) * k - 1) \bmod M$, where $0 \le i \le N_{subCH}$-1. A mapping relationship between a sub-channel and an interlaced resource in another RB set in the resource pool may also be represented by the mapping relationship herein.

Alternatively, in the third RB set, the RB with the smallest index in the resource pool is allocated to the sub-channel with the smallest index in the resource pool. Correspondingly, an interlaced resource in which the RB with the smallest index in the resource pool is located is allocated to the sub-channel with the smallest index in the third RB set, and then, the RBs included in the k interlaced resources (the interlaced resources corresponding to the k RBs) are sequentially allocated (or mapped) to sub-channels in descending order of indexes of the RBs based on the RB as a reference point. For specific content, refer to the foregoing descriptions. Details are not described herein again.

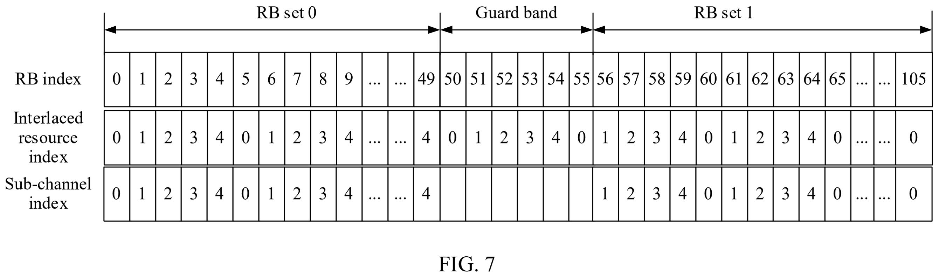

For example, as shown in FIG. 7, it is assumed that a subcarrier spacing of a BWP in which the resource pool is located is 30 kHz. The resource pool includes two RB sets and a guard band between the two RB sets. An RB set 0 includes 50 RBs, the guard band includes six RBs, and an RB set 1 includes 50 RBs. The RBs in the resource pool are sequentially numbered from 0 to 105 based on a frequency domain relationship in ascending order. An index of an interlaced resource corresponding to an RB with a smallest index in the RB set 0 is 0, and an index of an interlaced resource corresponding to an RB with a smallest index in the RB set 1 is 1. Specifically, indexes of 10 RBs included in an interlaced resource 0 in the RB set 0 are {0, 5, 10, 15, ..., 45}, indexes of 10 RBs included in an interlaced resource 1 in the RB set 0 are {1, 6, 11, 16, ..., 46}, and the same rule is applied for other interlaced resources in the RB set 0. Indexes of the six RBs included in the guard band are {50, 51, 52, 53, 54, 55}. Indexes of two RBs included in an interlaced resource 0 in the guard band are {50, 55}, an index of one RB included in an interlaced resource 1 in the guard band is {51}, an index of one RB included in an interlaced resource 2 is {52}, an index of one RB included in an interlaced resource 3 is {53}, and an index of one RB included in an interlaced resource 4 is {54}. Indexes of 10 RBs included in an interlaced resource 1 in the RB set 1 are {56, 61, 66, ..., 101}, indexes of 10 RBs included in an interlaced resource 2 in the RB set 1 are {57, 62, 66, ..., 102}, and the same rule is applied for other interlaced resources in the RB set 1.

The third RB set is the RB set 0. In other words, the RB set 0 is an RB set with a smallest index in the resource pool. In this case, an RB 0 is also an RB with a smallest index in the resource pool, and k=1. In other words, one sub-channel includes one interlaced resource (that is, one sub-channel in one RB set includes only an RB included in one interlaced resource in the RB set).

It is assumed that an interlaced resource with the smallest index in the RB set 0 is the interlaced resource 0 (the interlaced resource index may be an index defined at a carrier level, or may be an index obtained by re-numbering from the RB set 0). Based on the mapping relationship described above, if the RB 0 is allocated to a sub-channel 0, the interlaced resource 0 is allocated to the sub-channel 0. In other words, the RB 0 is located on the interlaced resource 0, and the interlaced resource 0 is allocated to the sub-channel 0. Further, the four interlaced resources: the interlaced resource 1, the interlaced resource 2, the interlaced resource 3, and the interlaced resource 4 are sequentially allocated to a sub-channel 1, a sub-channel 2, a sub-channel 3, and a sub-channel 4. Alternatively, if the mapping relationship is represented by Formula (1), in Formula (1), k=1, delta1=0, and delta2=0. An interlaced resource whose index is m is allocated to a sub-channel whose index is [floor((m+delta1)/k)+delta2] mod $N_{subCH}$, that is, the interlaced resource whose index is m is allocated to a sub-channel whose index is floor (m) mod 5.

In FIG. 7, the RB set 1 is duplication or repetition of the RB set 0. To be specific, five interlaced resources: the interlaced resource 0, the interlaced resource 1, the interlaced resource 2, the interlaced resource 3, and the interlaced resource 4 in the RB set 1 are sequentially allocated to the sub-channel 0, the sub-channel 1, the sub-channel 2, the sub-channel 3, and the sub-channel 4.

It can be learned that, on the basis of the RB set 0, a sub-channel with a smallest index (the sub-channel 0) in the RB set 0 includes a lowest RB index (the RB 0) in the RB set 0. However, to keep consistency between the RB set 1 and the RB set 0, a lowest RB index (an RB 60) of a sub-channel with a smallest index (the sub-channel 0) in the RB set 1 is not a lowest RB index (an RB 56) in the RB set 1.

If the UE 1 occupies a sub-channel 0 in the RB set 0, it indicates that the UE 1 occupies RB resources (that is, a total of 10 RBs: an RB 0, an RB 5, ..., and an RB 45) included in an interlaced resource 0 in the RB set 0. Similarly, if the UE 1 occupies a sub-channel 0 in the RB set 1, it indicates that the UE 1 occupies RB resources (that is, a total of 10 RBs: an RB 60, an RB 65, ..., and an RB 105) included in an interlaced resource 0 in the RB set 1. If the UE 1 occupies sub-channels 0 in the RB set 0 and in the RB set 1, RB resources on interlaced resources 0 in the RB set 0 and in the RB set 1 and resources with a same interlaced resource number in the guard band can also be occupied (that is, a total of 22 RBs: an RB 0, an RB 5, ..., an RB 45, an RB 50, an RB 55, an RB 60, an RB 65, ..., and an RB 105).

For example, the third RB set may be predefined, preconfigured, or configured by the network device. In this implementation, an RB with a smallest index in the third RB set is allocated to the sub-channel with the smallest index, or an interlaced resource in which an RB with a smallest index in the third RB set is located is allocated to the sub-channel with the smallest index; and then, the M interlaced resources in the third RB set (the resource pool) are sequentially allocated to sub-channels in a sequence in which k interlaced resources are mapped to one sub-channel. A mapping relationship between a sub-channel and an interlaced resource in the third RB set is consistent with a mapping relationship between a sub-channel and an interlaced resource in another RB set in the resource pool.

It is assumed that the third RB set is an RB set whose index is $N_{RB-set}$ in the resource pool. The RB with a smallest index in the RB set is allocated to a sub-channel with a smallest index in the RB set. Correspondingly, an interlaced resource in which the RB with the smallest index in the RB set whose index is $N_{RB-set}$ in the resource pool is located is allocated to the sub-channel with the smallest index; then, resources of k interlaced resources (interlaced resources corresponding to k RBs) are sequentially allocated to sub-channels in ascending order of RBs based on the RB as a reference point; and then, M interlaced resources in the RB set are sequentially allocated to sub-channels in a sequence in which one sub-channel includes k interlaced resources. A mapping relationship between a sub-channel and an interlaced resource in the third RB set is consistent with a mapping relationship between a sub-channel and an interlaced resource in another RB set in the resource pool.

Alternatively, it is assumed that the third RB set is an RB set whose index is $N_{RB-set}$ in the resource pool. The RB with a smallest index in the RB set is allocated to a sub-channel with a smallest index in the RB set. Correspondingly, an interlaced resource in which the RB with the smallest index in the RB set is located is allocated to the sub-channel with the smallest index in the RB set, and then, RBs included in k interlaced resources (interlaced resources corresponding to k RBs) are sequentially allocated (or mapped) to sub-channels in descending order of indexes of the RBs based on the RB as a reference point. For specific content, refer to the foregoing descriptions. Details are not described herein again.

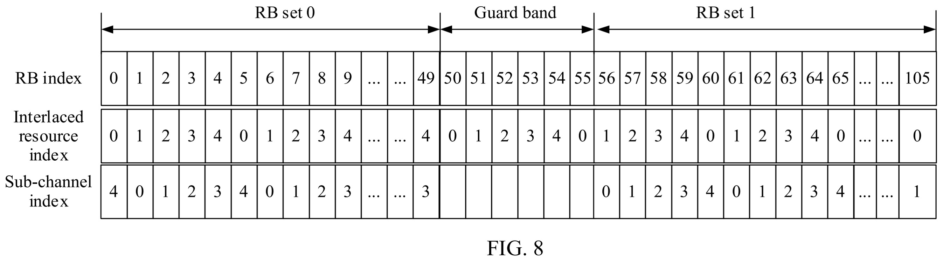

For example, as shown in FIG. 8, it is assumed that a subcarrier spacing of a BWP in which the resource pool is located is 30 kHz. The resource pool includes two RB sets and a guard band between the two RB sets. An RB set 0 includes 50 RBs, the guard band includes six RBs, and an RB set 1 includes 50 RBs. The RBs in the resource pool are sequentially numbered from 0 to 105 based on a frequency domain relationship in ascending order. An index of an interlaced resource corresponding to an RB with a smallest index in the RB set 0 is 0, and an index of an interlaced resource corresponding to an RB with a smallest index in the RB set 1 is 1. Specifically, indexes of 10 RBs included in the interlaced resource 0 in the RB set 0 are {0, 5, 10, 15, ..., 45}, indexes of 10 RBs included in the interlaced resource 1 in the RB set 0 are {1, 6, 11, 16, ..., 46}, and the same rule is applied for other interlaced resources in the RB set 0. Indexes of the six RBs included in the guard band are {50, 51, 52, 53, 54, 55}. Indexes of two RBs included in an interlaced resource 0 in the guard band are {50, 55}, an index of one RB included in an interlaced resource 1 in the guard band is {51}, an index of one RB included in an interlaced resource 2 is {52}, an index of one RB included in an interlaced resource 3 is {53}, and an index of one RB included in an interlaced resource 4 is {54}. Indexes of 10 RBs included in an interlaced resource 1 in the RB set 1 are {56, 61, 66, ..., 101}, indexes of 10 RBs included in an interlaced resource 2 in the RB set 1 are {57, 62, 66, ..., 102}, and the same rule is applied for other interlaced resources in the RB set 1.

It is assumed that the third RB set that is predefined, preconfigured, or configured by the network device is the RB set 1. To be specific, based on a mapping relationship between a sub-channel and an interlaced resource in the RB set 1, an interlaced resource in which an RB with a smallest index (namely, an RB 56) in the RB set 1 is located is the interlaced resource 1. In this case, the interlaced resource 1, the interlaced resource 2, the interlaced resource 3, and the interlaced resource 4 are respectively numbered to a sub-channel 0, a sub-channel 1, a sub-channel 2, and a sub-channel 3, and the interlaced resource 0 is allocated to a sub-channel 4.

A mapping relationship between a sub-channel and an interlaced resource in the RB set 0 is consistent with the mapping relationship between the sub-channel and the interlaced resource in the RB set 1. In this case, for the mapping relationship between the sub-channel and the interlaced resource in the RB set 0, refer to a configuration in the RB set 1. That is, the interlaced resource 1, the interlaced resource 2, the interlaced resource 3, and the interlaced resource 4 in the RB set 0 are respectively allocated to the sub-channel 0, the sub-channel 1, the sub-channel 2, and the sub-channel 3, and the interlaced resource 0 is allocated to the sub-channel 4. It can be learned that, on the basis of the RB set 1, a sub-channel with a smallest index (the sub-channel 0) in the RB set 1 includes a lowest RB index (the RB 56) in the RB set 1. However, to keep consistency between the RB set 1 and the RB set 0, a lowest RB index (an RB 1) of a sub-channel with a smallest index (the sub-channel 0) in the RB set 1 is not a lowest RB index (an RB 0) in the RB set 1.

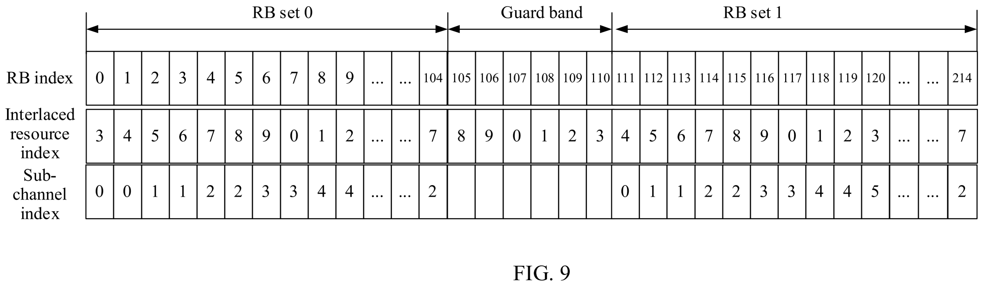

For example, as shown in FIG. 9, it is assumed that a subcarrier spacing of a BWP in which the resource pool is located is 15 kHz, M=10, and k=2. The resource pool includes two RB sets and a guard band between the two RB sets. An RB set 0 includes 105 RBs, the guard band includes six RBs, and an RB set 1 includes 105 RBs. The RBs in the resource pool are sequentially numbered from 0 to 215 in ascending order based on a frequency domain relationship. An index of an interlaced resource corresponding to an RB with a smallest index in the RB set 0 is 3, and an index of an interlaced resource corresponding to an RB with a smallest index in the RB set 1 is 4. Specifically, indexes of 11 RBs included in an interlaced resource 3 in the RB set 0 are {0, 10, 20, ..., 100}, indexes of 11 RBs included in an interlaced resource 4 in the RB set 0 are {1, 11, 21, ..., 101}, and the same rule is applied for other interlaced resources in the RB set 0. Indexes of six RBs included in the guard band are 105 to 110, and the six RBs in the guard band sequentially correspond to an interlaced resource 8, an interlaced resource 9, and an interlaced resource 0 to an interlaced resource 3. Indexes of 11 RBs included in an interlaced resource 4 in the RB set 1 are {111, 121, 131, ..., 211}, indexes of 11 RBs included in an interlaced resource 5 in the RB set 1 are {112, 122, 132, ..., 212}, and the same rule is applied for other interlaced resources in the RB set 1.

On the basis of the RB set whose index is 0 ($N_{RB-set}=0$), that is, the RB set 0 being the third RB set, the RB with the smallest index in the RB set is an RB 0. Because the RB 0 is located on the interlaced resource 3, two interlaced resources are mapped to one sub-channel. In this case, the interlaced resource 3 and the interlaced resource 4 in the RB set 0 are allocated to a sub-channel 0. Then, in ascending order of RBs or a sequence in which interlaced resources are arranged in frequency domain, an interlaced resource 5 and an interlaced resource 6 in the RB set 0 are allocated to a sub-channel 1, an interlaced resource 7 and an interlaced resource 8 in the RB set 0 are allocated to a sub-channel 2, an interlaced resource 9 and an interlaced resource 0 in the RB set 0 are allocated to a sub-channel 3, and an interlaced resource 1 and an interlaced resource 2 in the RB set 0 are allocated to a sub-channel 4. Similarly, indexes of interlaced resources and a quantity of interlaced resources included in the sub-channel 0 to the sub-channel 4 in the RB set 1 are the same as those included in the sub-channel 0 to the sub-channel 4 in the RB set 0. It should be noted that, in this configuration and mapping relationship, because RB resources in the RB set 1 start from the interlaced resource 4, a quantity of RBs included in the sub-channel 0 in the RB set 1 may be different from a quantity of RBs included in the RB set 0.

If the mapping relationship in FIG. 9 is represented by Formula (1), in Formula (1), k=2, delta1=7, and delta2=5. An interlaced resource whose index is m is allocated to a sub-channel whose index is [floor((m+delta1)/k)+delta2] mod $N_{subCH}$, that is, the interlaced resource whose index is m is allocated to a sub-channel whose index is [floor((m+7)/2)+5] mod 5.

In this application, it may be further indicated, through predefinition, preconfiguration, or network configuration, that an RB resource whose index is $N_{RB}$ in the resource pool (the RB set) is allocated to a sub-channel whose index is $N_{sub}$. For example, an interlaced resource with a smallest index in the resource pool (RB set) is allocated to a sub-channel with a smallest index. A sub-channel with a smallest index in the third RB set includes an RB at a lowest frequency domain position in the third RB set, or a sub-channel with a smallest index in the third RB set includes an interlaced resource with a smallest index in the third RB set. For example, a resource block at a lowest frequency domain position in the resource pool (RB set) is allocated to a sub-channel with a smallest index. In other words, sub-channels are numbered from the resource block at the lowest frequency domain position in the resource pool, or sub-channels are numbered from an RB with a smallest frequency domain in the resource pool.

In this implementation, it is assumed that the index of the interlaced resource with the smallest index in the third RB set in the resource pool is 0. A sub-channel whose index is 0 in the RB set includes k interlaced resources whose indexes are 0, 1, ..., and k - 1; a sub-channel whose index is 1 in the RB set includes k interlaced resources whose indexes are $k, k + 1, ...,$ and $2k - 1$; and by analogy, a sub-channel whose index is i in the RB set includes k interlaced resources whose indexes are $i * k, i * k + 1, ...,$ and $(i + 1) * k - 1$, where $0 \leq i \leq N_{subCH} - 1$. A mapping relationship between a sub-channel and an interlaced resource in another RB set in the resource pool may also be represented by the mapping relationship herein.

More generally, it is assumed that the RB resource whose index is $N_{RB}$ in the third RB set in the resource pool is allocated to the sub-channel whose index is $N_{sub}$. In this case, the sub-channel whose index is $N_{sub}$ in the RB set includes k interlaced resources whose indexes are m, $(m + 1) \mod M, ...,$ and $(m + k - 1) \mod M$; the sub-channel whose index is $N_{sub}$ in the RB set includes k interlaced resources whose indexes are $(m + k) \mod M$, $(m + k + 1) \mod M, ...,$ and $(m + 2k - 1) \mod M$; and interlaced resources included in other sub-channels may be deduced by analogy. Details are not described again.

For example, as shown in FIG. 9, it is assumed that k=1. If the RB set 0 is used as the third RB set, and a preset relationship includes: The sub-channel with the smallest index in the RB set includes the interlaced resource with the smallest index in the RB set, the interlaced resource 0 in the RB set 0 is allocated to the sub-channel 0, the interlaced resource 1 in the RB set 0 is allocated to the sub-channel 1, the interlaced resource 2 in the RB set 0 is allocated to the sub-channel 2, and the same rule is applied for other cases. Similarly, indexes of interlaced resources and a quantity of interlaced resources included in the sub-channel 0 to the sub-channel 9 in the RB set 1 are the same as those included in the sub-channel 0 to the sub-channel 9 in the RB set 0.

If the mapping relationship is represented by Formula (1), in Formula (1), k=1, delta1=0, and delta2=0. An interlaced resource whose index is m is allocated to a sub-channel whose index is [floor((m+delta1)/k)+delta2] mod $N_{subCH}$, that is, the interlaced resource whose index is m is allocated to a sub-channel whose index is floor(m) mod 10.

In addition, if the resource pool includes only one RB set, the mapping relationship is a mapping relationship between a sub-channel and an interlaced resource in the RB set. For an implementation of the mapping relationship between the sub-channel and the interlaced resource in the RB set, refer to the foregoing descriptions of the third RB set. Details are not described herein again.

Implementation 2: The mapping relationship includes: For any one of the $R_{RBset}$ RB sets, a sub-channel with a smallest index in the RB set includes k resource blocks with a smallest index in the RB set; or a sub-channel with a smallest index in the RB set includes k interlaced resources corresponding to k resource blocks with a smallest index in the RB set.

In the implementation 2, a mapping relationship between a sub-channel and an interlaced resource index may differ between different RB sets in the resource pool. To be specific, when the resource pool includes a plurality of RB sets, in different RB sets, quantities of interlaced resources included in sub-channels with a same index may be the same, but indexes of interlaced resources included in the sub-channels with the same index may be different.

For example, a sub-channel $N_{subCH,n'}$ in a first RB set in the resource pool includes k interlaced resources whose indexes are $m_0$, $(m_0 + 1) \mod M, ...,$ and $(m_0 + k - 1) \mod M$; and a sub-channel $N_{subCH,n'}$ in a second RB set in the resource pool includes k interlaced resources whose indexes are $m_1$, $(m_1 + 1) \mod M, ...,$ and $(m_1 + k - 1) \mod M$. The first RB set and the second RB set are any two RB sets in the resource pool. Values of $m_0$ and $m_1$ may be the different, or values of $m_0$ and $m_1$ may be the same. This is not specifically limited.

In this implementation, the mapping relationship between the sub-channel and the interlaced resource may alternatively be represented as follows.

For the first RB set in the plurality of RB sets, the first RB set is any one of the plurality of RB sets, and an index index_sub of a sub-channel to which an interlaced resource whose index is m is mapped in the first RB set (or the resource pool) meets the following form:

$$\text{index\_sub} = [\text{floor}((m - m_{RBset,i} + M + N_{RB-set}^{offset})/k) + \text{delta3}] \bmod N_{subCH}; \text{ or}$$

$$\text{index\_sub} = [\text{ceil}((m - m_{RBset,i} + M + N_{RB-set}^{offset})/k) + \text{delta3}] \bmod N_{subCH}; \text{ or}$$

$$\text{index\_sub} = [\text{floor}((m - m_{RBset,i} + N_{RB-set}^{offset})/k) + \text{delta3}] \bmod N_{subCH}; \text{ or}$$

$$\text{index\_sub} = [\text{ceil}((m - m_{RBset,i} + N_{RB-set}^{offset})/k) + \text{delta3}] \bmod N_{subCH}; \text{ or}$$

$$\text{index\_sub}=[\text{floor}((m-m_{RBset,i}+M)/k)+\text{delta3}] \bmod \text{ N}_{subCH}; \text{ or}$$

$$\text{index\_sub}=[\text{ceil}((m-m_{RBset,i}+M)/k)+\text{delta3}] \bmod \text{ N}_{subCH}; \text{ or}$$

$$\text{index\_sub}=[\text{floor}((m-m_{RBset,i}+M)/k)] \bmod \text{ N}_{subCH}; \text{ or}$$

$$\text{index\_sub}=[\text{ceil}((m-m_{RBset,i}+M)/k)] \bmod \text{ N}_{subCH}.$$

Herein, an index of an interlaced resource in which a resource block with a smallest index in the first RB set is located is $m_{RBset,i}$. $N_{RB-set}^{offset}$ and delta3 are predefined, preconfigured, or configured by the network device, and $N_{RB-set}^{offset}$ and delta3 are integers. For example, a value range of $N_{RB-set}^{offset}$ is $-M \leq N_{RB-set}^{offset} \leq M$, and a value range of delta3 is $-N_{subCH} \leq \text{delta3} \leq N_{subCH}$. $N_{subCH}$ is a quantity of sub-channels in the RB set, $N_{subCH}$ is an integer greater than 1, floor is a rounding down operation, ceil is a rounding up operation, and mod is a modulo operation.

In an implementation, the mapping relationship may further include: A sub-channel with a smallest index in an $R_{RBset,r}$th RB set in the resource pool includes a lowest frequency domain resource block position in the $R_{RBset,r}$th RB set, where r is any integer from 0 to $R_{RBset}$-1.

In the foregoing mapping relationship between the sub-channel and the interlaced resource, an offset between an RB resource included in a sub-channel whose index is 0 in an RB set and an RB at a lowest frequency domain position (or with a smallest index) in the RB set is $N_{RB-set}^{offset}$ (the value is predefined, preconfigured, or configured by the network device). A sub-channel whose index is 0 in each RB set starts with $N_{RB-set}^{offset}$, and then, periodical numbering is performed every M RBs based on k contiguous RBs as a group. This mapping relationship can ensure that a sub-channel whose index is 0 in each RB set in the resource pool includes an RB at a lowest frequency domain position (or with a smallest index) in the RB set, but indexes of interlaced resources included in sub-channels with a same index in different RB sets may be different.

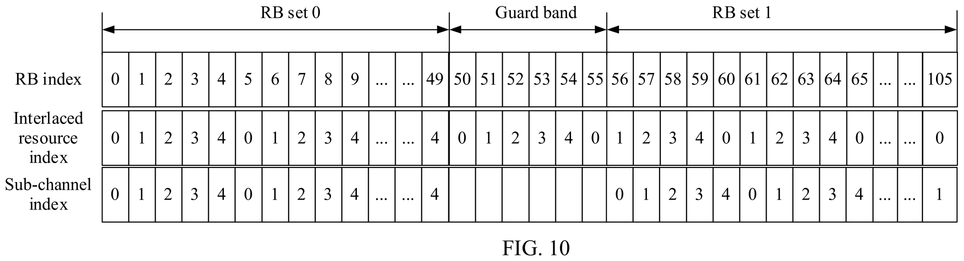

For example, with reference to the foregoing descriptions and as shown in FIG. 10, it is assumed that a subcarrier spacing of a BWP in which the resource pool is located is 30 kHz. The resource pool includes two RB sets and a guard band between the two RB sets. An RB set 0 includes 50 RBs, the guard band includes six RBs, and an RB set 1 includes 50 RBs. The RBs in the resource pool are sequentially numbered from 0 to 105 based on a frequency domain relationship in ascending order. An index of an interlaced resource corresponding to an RB with a smallest index in the RB set 0 is 0, and an index of an interlaced resource corresponding to an RB with a smallest index in the RB set 1 is 1. Specifically, indexes of 10 RBs included in the interlaced resource 0 in the RB set 0 are {0, 5, 10, 15, ..., 45}, indexes of 10 RBs included in the interlaced resource 1 in the RB set 0 are {1, 6, 11, 16, ..., 46}, and the same rule is applied for other interlaced resources in the RB set 0. Indexes of the six RBs included in the guard band are {50, 51, 52, 53, 54, 55}. Indexes of two RBs included in an interlaced resource 0 in the guard band are {50, 55}, an index of one RB included in an interlaced resource 1 in the guard band is {51}, an index of one RB included in an interlaced resource 2 is {52}, an index of one RB included in an interlaced resource 3 is {53}, and an index of one RB included in an interlaced resource 4 is {54}. Indexes of 10 RBs included in an interlaced resource 1 in the RB set 1 are {56, 61, 66, ..., 101}, indexes of 10 RBs included in an interlaced resource 2 in the RB set 1 are {57, 62, 66, ..., 102}, and the same rule is applied for other interlaced resources in the RB set 1.

If mapping is performed based on the mapping relationship described in the implementation 2, a sub-channel 0 in each RB set in the figure starts from an RB with a smallest index in the RB set; and then, RBs are sequentially allocated to sub-channels in ascending order of RB indexes based on a periodicity of M=5. For example, a sub-channel 0 in the RB set 0 includes RBs (an RB 0, an RB 5, ..., and an RB 45), a sub-channel 1 in the RB set 0 includes RBs (an RB 1, an RB 6, ..., and an RB 46), and another sub-channel in the RB set 0 may be deduced by analogy. Details are not described again. A sub-channel 0 in the RB set 1 includes RBs (an RB 56, an RB 61, ..., and an RB 101), a sub-channel 1 in the RB set 1 includes RBs (an RB 57, an RB 62, ..., and an RB 102), and another sub-channel in the RB set 1 may be deduced by analogy. Details are not described again.

In this case, a specific mapping relationship between a sub-channel and an interlaced resource is as follows: For the RB set 0, RB resources included in an interlaced resource 0, an interlaced resource 1, an interlaced resource 2, an interlaced resource 3, and an interlaced resource 4 in the RB set are respectively allocated to a sub-channel 0, a sub-channel 1, a sub-channel 2, a sub-channel 3, and a sub-channel 4; and for the RB set 1, RBs included in an interlaced resource 0, an interlaced resource 1, an interlaced resource 2, an interlaced resource 3, and an interlaced resource 4 are respectively allocated to a sub-channel 4, a sub-channel 0, a sub-channel 1, a sub-channel 2, and a sub-channel 3.

Further, the mapping relationship in FIG. 10 may also be represented by the foregoing formula, for example, represented by the following formula:

$$\text{index\_sub} = [\text{floor}((m - m_{\text{RBset,i}} + M + N_{\text{RB-set}}^{\text{offset}})/k) + \text{delta3}] \bmod N_{\text{subCH}}.$$

In this case, $N_{\text{subCH}}$=5, delta3=0, and $N_{\text{RB-set}}^{\text{offset}}$=0 . For the RB set 0, $m_{\text{RBset,i}}$=0, and an interlaced resource whose index is m in the RB set 0 is allocated to a sub-channel whose index is index_sub=[floor((m+5)/1)] mod 5.

For the RB set 1, $m_{\text{RBset,i}}$=1, and an interlaced resource whose index is m in the RB set 1 is allocated to a sub-channel whose index is [floor((m+4)/1)] mod 5. It can be learned from the formula that this mapping manner indicates that, the sub-channel 0 in each RB set is numbered from the RB with the smallest index in the RB set, and then, interlaced resources are sequentially allocated to sub-channels in ascending order of RB indexes based on a periodicity of M=5.

In an implementation, if mapping between a sub-channel and an interlaced resource is performed based on the mapping relationship described in the implementation 2, when the first resource indicated by the first indication information includes RBs in a plurality of RB sets, because indexes of interlaced resources included in sub-channels with a same index in different RB sets may be different, interlaced resources corresponding to RBs included in the first resource in the different RB sets may be different. For example, an RB included in the first resource in the RB set 0 belongs to the interlaced resource 0, and an RB included in the first resource in the RB set 1 belongs to the interlaced resource 1.

Therefore, when the first terminal device receives the first indication information, if mapping between a sub-channel and an interlaced resource is performed based on the mapping relationship described in the implementation 2, the first terminal device can interpret, based on an RB set with a smallest index in a plurality of RB sets corresponding to the first resource, that is, a mapping relationship between a sub-channel and an interlaced resource in the RB set with the smallest index in the plurality of RB sets corresponding to the first resource, a mapping relationship between a sub-channel and an interlaced resource in another RB set in the plurality of RB sets, in other words, determine, based on the mapping relationship between the sub-channel and the interlaced resource in the RB set with the smallest index in the plurality of RB sets, an interlaced resource included in the first resource in the another RB set in the plurality of RB sets. In other words, although a mapping relationship between a sub-channel and an interlaced resource in another RB set in the plurality of RB sets is different from the mapping relationship between the sub-channel and the interlaced resource in the RB set with the smallest index in the plurality of RB sets, the first resource is actually determined based on the mapping relationship between the sub-channel and the interlaced resource in the RB set with the smallest index in the plurality of RB sets, and the mapping relationship between the sub-channel and the interlaced resource in the another RB set in the plurality of RB sets is duplication or repetition of the mapping relationship between the sub-channel and the interlaced resource in the RB set with the smallest index.

In this application, the RB sets are sequentially numbered in ascending order in frequency domain. It may be understood that a frequency domain position of the RB set #1 is higher than a frequency domain position of the RB set #0.

For example, the first indication information indicates that the first resource includes the sub-channel $N_{\text{subCH,n'}}$ in the first RB set and the sub-channel $N_{\text{subCH,n'}}$ in the second RB set. An index of the first RB set may be smaller than an index of the second RB set. If the sub-channel $N_{\text{subCH,n'}}$ in the first RB set includes k interlaced resources whose indexes are $m_0$, $(m_0 + 1) \bmod M$, ..., and $(m_0 + k - 1) \bmod M$, the sub-channel $N_{\text{subCH,n'}}$ in the second RB set includes k interlaced resources whose indexes are $m_1$, $(m_1 + 1) \bmod M$, ..., and $(m_1 + k - 1) \bmod M$, and values of $m_0$ and $m_1$ are different, when determining the first resource based on the first indication information, the first terminal device ignores a mapping relationship between a sub-channel and an interlaced resource in the second RB set, and uses a mapping relationship between a sub-channel and an interlaced resource in the first RB set. In this case, RBs included in the first resource are RBs included in k interlaced resources whose indexes are $m_0$, $(m_0 + 1) \bmod M$, ..., and $(m_0 + k - 1) \bmod M$ in the first RB set, and RBs included in k interlaced resources whose indexes are $m_0$, $(m_0 + 1) \bmod M$, ..., and $(m_0 + k - 1) \bmod M$ in the second RB set. Alternatively, the first resource includes the k interlaced resources whose indexes are $m_0$, $(m_0 + 1) \bmod M$, ..., and $(m_0 + k - 1) \bmod M$ included in the first RB set, and includes the k interlaced resources whose indexes are $m_0$, $(m_0 + 1) \bmod M$, ..., and $(m_0 + k - 1) \bmod M$ included in the second RB set.

For example, as shown in FIG. 10, in the RB set 0, the five interlaced resources: the interlaced resource 0, the interlaced resource 1, the interlaced resource 2, the interlaced resource 3, and the interlaced resourced 4 are sequentially allocated to the sub-channel 0, the sub-channel 1, the sub-channel 2, the sub-channel 3, and the sub-channel 4. In the RB set 1, the five interlaced resources: the interlaced resource 0, the interlaced resource 1, the interlaced resource 2, the interlaced resource 3, and the interlaced resource 4 are sequentially allocated to the sub-channel 4, the sub-channel 0, the sub-channel 1, the sub-channel 2, and the sub-channel 3.

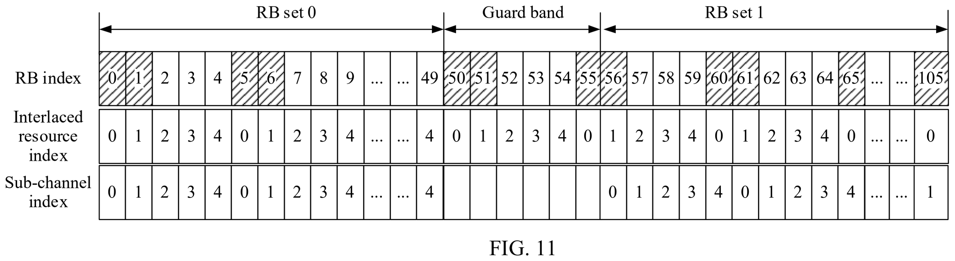

As shown in FIG. 11, it is assumed that the first indication information indicates that data transmission occupies a sub-channel 0 and a sub-channel 1 that are in an RB set 0, and a sub-channel 0 and a sub-channel 1 that are in an RB set 1. In this case, in the RB set 0, the sub-channel 0 corresponds to an interlaced resource 0, and the sub-channel 1 corresponds to an interlaced resource 1; and in the RB set 1, the sub-channel 0 corresponds to an interlaced resource 1, and the sub-channel 1 corresponds to an interlaced resource 2. When receiving the first indication information, the first terminal device determines, based on a mapping relationship between a sub-channel and an interlaced resource in the RB set 0, a mapping relationship between a sub-channel and an interlaced resource included in the first resource in the RB set 1. In this case, the first terminal device determines that the first resource includes the interlaced resource 0 and the interlaced resource 1 in the RB set 0, and includes the interlaced resource 0 and the interlaced resource 1 in the RB set 1. The resources are time-frequency resources actually occupied by the first terminal device. In this case, in a guard band between the two RB sets, RBs located on an interlaced resource 0 and an interlaced resource 1 can also be allocated to transmit data. RBs marked with shadows in the figure are RBs included in the first resource that is actually determined by the terminal device based on the first indication information.

It may be understood as follows: An SL BWP includes M interlaced resources, a value of M is related to an SCS, indexes of interlaced resources in the SL BWP are {0, 1, ..., M-1}, two adjacent interlaced RBs included in an interlaced resource whose index is m are spaced from each other by M resource blocks, and the interlaced resources in the SL BWP are distributed in a frequency domain range of the SL BWP. Similarly, an SL resource pool includes M interlaced resources, a value of M is related to an SCS, indexes of interlaced resources in the SL resource pool are {0, 1, ..., M-1}, two adjacent interlaced RBs included in an interlaced resource whose index is m are spaced from each other by M resource blocks, and the interlaced resources in the SL resource pool are distributed in a frequency domain range of the SL resource pool. Similarly, an RB set includes M interlaced resources, a value of M is related to an SCS, indexes of interlaced resources in the RB set are {0, 1, ..., M-1}, two adjacent interlaced RBs included in an interlaced resource whose index is m are spaced from each other by M resource blocks, and the interlaced resources in the RB set are distributed in a frequency domain range of the RB set.

The steps in the foregoing embodiments do not depend on a sequence, and may be separately performed. Optional steps may not be performed.

In this application, it may be further agreed in advance that a quantity of RBs in the RB set and a quantity of RBs included in the guard band meet a preset relationship. For example, the resource pool further includes at least one guard band, and one guard band is located between two adjacent RB sets in a plurality of RB sets. A result of a modulo operation between a sum of a quantity of resource blocks included in the first RB set and a quantity of resource blocks included in the first guard band and the quantity corresponding to the plurality of interlaces is 0. The first guard band is a guard band that is in the at least one guard band and that is adjacent to the first RB set. The first RB set may be located before the first guard band in ascending order of frequency domain positions.

In another implementation, a quantity of RBs included in an RB set in the resource pool or the SL BWP and a quantity of RBs included in a guard band after a frequency domain position of the RB set meet the following relationship:

$$\left(N_i^{RB\,set} + N_i^{GB}\right) mod\, M = 0.$$

Herein, $0 \leq i < R_{RBset}$, $R_{RBset}$ represents a total quantity of RB sets included in the resource pool, $N_i^{RB\,set}$ represents a quantity of RBs included in an ith RB set in the resource pool, and $N_i^{GB}$ represents a quantity of RBs included in an ith guard band in the resource pool. The ith guard band is a guard band represented by an upper boundary of the ith RB set, that is, the guard band is after the ith RB set in frequency domain; and the ith guard band is adjacent to the ith RB set. When i=0, the RB set 0 indicates a 1st RB set (in ascending order in frequency domain) in the resource pool or the BWP. The RB herein may alternatively be replaced with a physical resource block (physical resource block, PRB).

For example, when the resource pool corresponds to different subcarrier spacings, quantities of RBs included in the RB set and in the guard band in the resource pool may be shown in Table 1.

Table 1

| Subcarrier spacing (kHz) | 40 MHz | 60 MHz | 80 MHz |
|---|---|---|---|
| 15 | 104-6-106 (216)<br>104-6-105 (215)<br>104-6-104 (214)<br>103-7-104 (214)<br>103-7-105 (215)<br>103-7-103 (213) | N/A | N/A |

(continued)

| Subcarrier spacing (kHz) | 40 MHz | 60 MHz | 80 MHz |
|---|---|---|---|
| 30 | 48-7-48 (103) | 50-5-50-5-51 (161) | 50-5-50-5-50-5-51 (216) |
| | 49-6-49 (104) | 50-5-49-6-50 (160) | 50-5-50-5-50-5-50 (215) |
| | 49-6-50 (105) | 50-5-50-5-49 (159) | 49-6-49-6-50-5-50 (215) |
| | 49-6-51 (106) | 50-5-50-5-50 (160) | 49-6-49-6-50-5-51 (216) |
| | 50-5-51 (106) | 49-6-49-6-49 (160) | 49-6-49-6-49-6-51 (216) |
| | 50-5-50 (105) | 49-6-50-5-50 (160) | 49-6-49-6-49-6-49 (214) |
| | 50-5-49 (104) | 50-5-49-6-51 (161) | |

In Table 1, an example in which a supported bandwidth of the resource pool is 40 MHz, 60 MHz, or 80 MHz is used for description. Each row of data in Table 1 represents, in a form of "$TBW_0$-$GB_0$-...-$GB_{N\_RBset-2}$-$TBW_{N\_RBset-1}$", quantities of RBs included in each RB set and in a guard band between two adjacent RB sets in the resource pool in ascending order of frequency domain positions, where $TBW_0$ represents a quantity of RBs included in the RB set 0, $GB_0$ represents a quantity of RBs included in a guard band 0, and other cases are deduced by analogy. Data in "()" after each row of data represents a total quantity of RBs that can be used for data transmission in this bandwidth configuration.

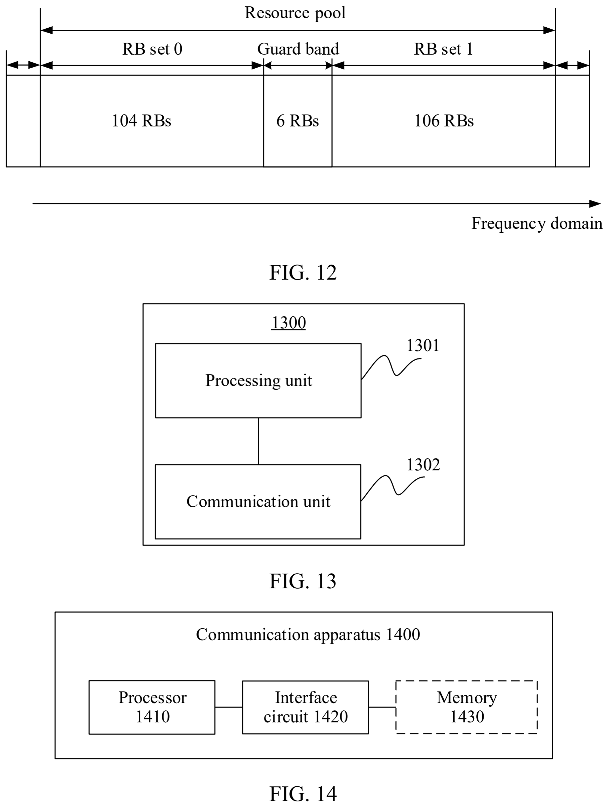

For example, in FIG. 12, "104-6-106 (216)" in 40 MHz is used as an example. The data represents that, in ascending order of frequency domain positions and in the resource pool, an RB set 0 includes 104 RBs, a guard band 0 includes six RBs, and an RB set 1 includes 106 RBs; and (216) represents that a quantity of RBs that can be used for data transmission is 216 in a configuration of 40 MHz.

For example, "50-5-50-5-50-5-51 (216)" in 80 MHz is used as an example. The data represents that, in ascending order of frequency domain positions and in the resource pool, an RB set 0 includes 50 RBs, a guard band 0 includes five RBs, an RB set 1 includes 50 RBs, a guard band 1 includes five RBs, an RB set 2 includes 50 RBs, a guard band 2 includes five RBs, and an RB set 3 includes 51 RBs; and (216) represents that a quantity of RBs that can be used for data transmission is 216 in a configuration of 80 MHz.

The quantities of RBs in the RB set and in the guard band are configured according to the foregoing method, so that regardless of whether the mapping relationship between the sub-channel and the interlaced resource in the foregoing implementation 1 or the mapping relationship between the sub-channel and the interlaced resource in the foregoing implementation 2 is used, each of sub-channels with a same index in any two of the plurality of RB sets in the resource pool can also correspond to same indexes of k interlaced resources. According to this method, during cross-RB-set transmission, a problem such as a peak to average power ratio (peak to average power ratio, PAPR) or uneven power in a data transmission process caused by different indexes of interlaced resources occupied by sub-channels with a same index can be avoided.

In the foregoing embodiments provided in this application, the method provided in embodiments of this application is described from a perspective of interaction between devices. To implement functions in the method provided in embodiments of this application, the network device or the terminal device may include a hardware structure and/or a software module, to implement the foregoing functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

In this embodiment of this application, module division is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 13, an embodiment of this application further provides a communication apparatus 1300, configured to implement a function of the network device or the terminal device in the foregoing method. For example, the apparatus may be a software module or a chip system. In this embodiment of this application, the chip system may include a chip, or may include a chip and another discrete component. The communication apparatus 1300 may include a processing unit 1301 and a communication unit 1302.

In this embodiment of this application, the processing unit may also be referred to as a processor, a processing board, a processing module, a processing apparatus, or the like. The communication unit may also be referred to as a transceiver, a transceiver machine, a transceiver apparatus, a transceiver unit, or the like. The transceiver unit may include a sending unit and/or a receiving unit, configured to respectively perform the sending and receiving steps of the network device or the terminal device in the foregoing method embodiment.

The following describes in detail communication apparatuses provided in embodiments of this application with reference to FIG. 13 and FIG. 14. It should be understood that descriptions of apparatus embodiments correspond to the descriptions of the method embodiment. Therefore, for content that is not described in detail, refer to the foregoing method embodiment. For brevity, details are not described herein again.

In an implementation, the communication apparatus 1300 may perform the following functions.

The processing unit is configured to determine a resource pool based on configuration information, where the resource pool includes $R_{RBset}$ resource block sets, $R_{RBset}$ is an integer greater than or equal to 1, one resource block set includes $N_{subCH}$ sub-channels, one sub-channel includes k interlaced resources, k is an integer greater than or equal to 1, and one resource block set includes M interlaced resources.

The communication unit is configured to receive first indication information from a second terminal device, where the first indication information indicates L sub-channels included in a first resource, and L is an integer greater than 0.

The processing unit is configured to determine, based on the L sub-channels, at least one interlaced resource included in the first resource, where the at least one interlaced resource and the L sub-channels meet a mapping relationship.

In an implementation, the communication apparatus 1300 may perform the following functions.

The processing unit is configured to determine a first resource, where the first resource includes at least one interlaced resource, the at least one interlaced resource is located in a resource pool, the resource pool includes $R_{RBset}$ resource block sets, $R_{RBset}$ is an integer greater than or equal to 1, one resource block set includes $N_{subCH}$ sub-channels, one sub-channel includes k interlaced resources, k is an integer greater than or equal to 1, and one resource block set includes M interlaced resources.

The communication unit is configured to send first indication information to a first terminal device, where the first indication information indicates L sub-channels included in the first resource, L is an integer greater than 0, and the at least one interlaced resource and the L sub-channels meet a mapping relationship.

The foregoing is merely an example. The processing unit 1301 and the communication unit 1302 may further perform other functions. For more detailed descriptions, refer to the related descriptions in the foregoing method embodiment. Details are not described herein again.

FIG. 14 shows a communication apparatus 1400 according to an embodiment of this application. The apparatus shown in FIG. 14 may be an implementation of a hardware circuit of the apparatus shown in FIG. 13. The communication apparatus is applicable to the foregoing flowcharts, and performs functions of the network device and the terminal device in the foregoing method embodiment. For ease of description, FIG. 14 merely shows main components of the communication apparatus.

As shown in FIG. 14, the communication apparatus 1400 includes a processor 1410 and an interface circuit 1420. The processor 1410 and the interface circuit 1420 are coupled to each other. It can be understood that the interface circuit 1420 may be a transceiver or an input/output interface.

Optionally, in an implementation, the communication apparatus 1400 may further include a memory 1430, configured to store instructions executed by the processor 1410, or store input data required by the processor 1410 to run the instructions, or store data generated after the processor 1410 runs the instructions.

When the communication apparatus 1400 is configured to implement the foregoing method, the processor 1410 is configured to implement a function of the processing unit 1301, and the interface circuit 1420 is configured to implement a function of the communication unit 1302.

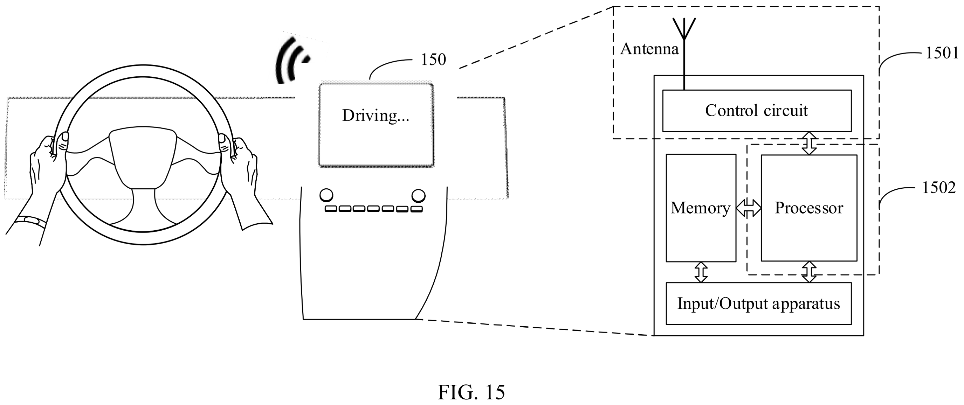

FIG. 15 is a diagram of a structure of a communication apparatus according to this application. The communication apparatus may be a terminal device. For ease of description, FIG. 15 merely shows main components of the communication apparatus. As shown in FIG. 15, the communication apparatus 150 includes a processor, a memory, a control circuit, an antenna, and an input/output apparatus. The processor is mainly configured to process a communication protocol and communication data, control the entire communication apparatus, execute a software program, and process data of the software program, for example, is configured to support the communication apparatus in performing actions described in the foregoing method embodiments. The memory is mainly configured to store the software program and the data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to receive data input by a user and output data to the user.

After the communication apparatus is powered on, the processor may read the software program in the memory, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When the data is sent to the communication apparatus, the radio frequency circuit receives the radio frequency signal through the antenna, converts the radio frequency signal into the baseband signal, and outputs the baseband signal to the processor. The processor converts the baseband signal into data, and processes the data.

A person skilled in the art may understand that, for ease of description, FIG. 15 shows only one memory and one processor. In an actual communication apparatus, there may be a plurality of processors and a plurality of memories. The memory may also be referred to as a storage medium, a storage device, or the like. This is not limited in this application.

In an optional implementation, the processor may include a baseband processor and/or a central processing unit. The baseband processor is mainly configured to process the communication protocol and the communication data. The central processing unit is mainly configured to control the entire communication apparatus, execute the software program, and process the data of the software program. Functions of the baseband processor and the central processing unit may be integrated into the processor in FIG. 15. A person skilled in the art may understand that the baseband processor and the central processing unit may also be independent processors, and are interconnected by using a technology like a bus. A person skilled in the art may understand that the communication apparatus may include a plurality of baseband processors to adapt to different network standards, the communication apparatus may include a plurality of central processing units to enhance a processing capability thereof, and components in the communication apparatus may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In this embodiment of this application, the antenna and the control circuit that have receiving and sending functions may be considered as a transceiver unit 1501 of the communication apparatus 150, for example, configured to support the communication apparatus in implementing the receiving function and the sending function in the method embodiments. The processor having a processing function is considered as a processing unit 1502 of the communication apparatus 150. The communication apparatus 150 includes the transceiver unit 1501 and the processing unit 1502. The transceiver unit 1501 may also be referred to as a transceiver, a transceiver machine, a transceiver apparatus, or the like. Optionally, a device that is configured to implement the receiving function and that is in the transceiver unit 1501 may be considered as a receiving unit, and a device that is configured to implement the sending function and that is in the transceiver unit 1501 may be considered as a sending unit. In other words, the transceiver unit 1501 includes the receiving unit and the sending unit. The receiving unit may also be referred to as a receiver, an input port, a receiving circuit, or the like. The sending unit may be referred to as a transmitter machine, a transmitter, a transmitting circuit, or the like. For example, the transceiver unit 1501 may not include the antenna, but includes only the circuit part, so that the antenna is disposed outside the transceiver unit.

The processing unit 1502 may be configured to execute an instruction stored in the memory, to control the transceiver unit 1501 to receive a signal and/or send a signal, and implement functions of the communication apparatus in the foregoing method embodiments. In an implementation, the functions of the transceiver unit 1501 may be implemented through a transceiver circuit or a dedicated transceiver chip. When receiving and sending various types of signals, the processing unit 1502 controls the transceiver unit 1501 to implement the receiving. Therefore, the processing unit 1502 is a decider of the signal sending and receiving, and initiates data sending and receiving operations. The transceiver unit 1501 is a performer of the signal sending and receiving.

It may be understood that the processor in embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any conventional processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, so that the processor can read information from the storage medium and write information into the storage medium. Certainly, the storage medium may further be a component of the processor. The processor and the storage medium may be located in the ASIC.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

These computer program instructions may be stored in a computer-readable memory that can indicate the computer or another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clearly that a person skilled in the art can make various modifications and variations to this application without departing from the scope of this application. In this way, this application is intended to cover these modifications and variations of this application provided that they fall within the scope of protection defined by the claims and their equivalent technologies of this application.

**Claims**

1. A resource indication method, comprising:

   determining, by a first terminal device, a resource pool based on configuration information, wherein the resource pool comprises $R_{RBset}$ resource block sets, $R_{RBset}$ is an integer greater than or equal to 1, one resource block set comprises $N_{subCH}$ sub-channels, one sub-channel comprises k interlaced resources, k is an integer greater than or equal to 1, and one resource block set comprises M interlaced resources;
   receiving, by the first terminal device, first indication information from a second terminal device, wherein the first indication information indicates L sub-channels comprised in a first resource, and L is an integer greater than 0; and
   determining, by the first terminal device based on the L sub-channels, at least one interlaced resource comprised in the first resource, wherein the at least one interlaced resource and the L sub-channels meet a mapping relationship.

2. The method according to claim 1, wherein the mapping relationship comprises:

   the $R_{RBset}$ resource block sets comprise a first resource block set and a second resource block set; and
   the first resource block set comprises a sub-channel whose index is $N_{subCH,n'}$, and indexes of k interlaced resources comprised in the sub-channel whose index is $N_{subCH,n'}$, in the first resource block set are the same as indexes of k interlaced resources comprised in a sub-channel whose index is $N_{subCH,n'}$ in the second resource block set.

3. The method according to claim 2, wherein the k interlaced resources comprised in the sub-channel whose index is $N_{subCH,n'}$ in the first resource block set are determined based on a third resource block set in the $R_{RBset}$ resource block sets.

4. The method according to claim 3, wherein the third resource block set is a resource block set at a lowest frequency domain position in the resource pool; or the third resource block set is a resource block set with a lowest resource block set index in the resource pool.

5. The method according to claim 3 or 4, wherein a sub-channel with a smallest index in the third resource block set comprises a resource block at a lowest frequency domain position in the third resource block set; or
   a sub-channel with a smallest index in the third resource block set comprises an interlaced resource with a smallest index in the third resource block set.

6. The method according to any one of claims 1 to 5, wherein the mapping relationship comprises:
   an index of a sub-channel to which an interlaced resource whose index is m is mapped in the resource pool or any one of the $R_{RBset}$ resource block sets meets the following form:

[floor((m+delta1)/k)+delta2] mod $N_{subCH}$ or [ceil((m+delta1)/k)+delta2] mod $N_{subCH}$, wherein delta1 and delta2 are predefined, preconfigured, or configured by a network device, floor is a rounding down operation, ceil is a rounding up operation, and mod is a modulo operation.

7. The method according to claim 1, wherein the mapping relationship comprises:

   for any one of the $R_{RBset}$ resource block sets, a sub-channel with a smallest index in the resource block set comprises k resource blocks with a smallest index in the resource block set; or
   a sub-channel with a smallest index in the resource block set comprises k interlaced resources corresponding to k resource blocks with a smallest index in the resource block set; or
   a sub-channel with a smallest index in the resource block set comprises a resource block at a lowest frequency domain position in the resource block set; or
   a sub-channel with a smallest index in the resource block set comprises an interlaced resource with a smallest index in the resource block set.

8. The method according to claim 1, wherein the mapping relationship comprises: a sub-channel with a smallest index in an $R_{RBset,r}^{th}$ resource block set comprises a lowest frequency domain resource block position in the $R_{RBset,r}^{th}$ resource block set, wherein r is any integer from 0 to $R_{RBset}$-1.

9. The method according to claim 1 or 7, wherein for a first resource block set in the plurality of resource block sets, an index of a sub-channel to which an interlaced resource whose index is m is mapped in the first resource block set meets the following form:

$$[floor((m-m_{RBset,i}+M+N_{RB-set}^{offset})/k)+delta3] \bmod N_{subCH}; \text{ or}$$

$$[ceil((m-m_{RBset,i}+M+N_{RB-set}^{offset})/k)+delta3] \bmod N_{subCH}; \text{ or}$$

$$[floor((m-m_{RBset,i}+N_{RB-set}^{offset})/k)+delta3] \bmod N_{subCH}; \text{ or}$$

$$[ceil((m-m_{RBset,i}+N_{RB-set}^{offset})/k)+delta3] \bmod N_{subCH}, \text{ wherein}$$

   an index of an interlaced resource in which a resource block with a smallest index in the first resource block set is located is $m_{RBset,i}$, $N_{RB-set}^{offset}$ and delta3 are predefined, preconfigured, or configured by a network device, floor is a rounding down operation, ceil is a rounding up operation, and mod is a modulo operation.

10. The method according to claim 1, wherein the resource pool further comprises at least one guard band, and one guard band is located between two adjacent resource block sets in the plurality of resource block sets; and
    a result of a modulo operation between a sum of a quantity of resource blocks comprised in a first resource block set and a quantity of resource blocks comprised in a first guard band and the quantity corresponding to the plurality of interlaced resources is 0; and the first guard band is a guard band that is in the at least one guard band and that is adjacent to the first resource block set.

11. The method according to any one of claims 1 to 10, wherein the first indication information further indicates P resource block sets, and a resource block comprised in the first resource is located in the P resource block sets, wherein P is an integer greater than or equal to 1.

12. A resource indication method, comprising:

    determining, by a second terminal device, a first resource, wherein the first resource comprises at least one interlaced resource, the at least one interlaced resource is located in a resource pool, the resource pool comprises $R_{RBset}$ resource block sets, $R_{RBset}$ is an integer greater than or equal to 1, one resource block set comprises $N_{subCH}$ sub-channels, one sub-channel comprises k interlaced resources, k is an integer greater than or equal to 1, and one resource block set comprises M interlaced resources; and

sending, by the second terminal device, first indication information to a first terminal device, wherein the first indication information indicates L sub-channels comprised in the first resource, L is an integer greater than 0, and the at least one interlaced resource and the L sub-channels meet a mapping relationship.

13. The method according to claim 12, wherein the mapping relationship comprises:

the $R_{RBset}$ resource block sets comprise a first resource block set and a second resource block set; and
the first resource block set comprises a sub-channel whose index is $N_{subCH,n'}$, and indexes of k interlaced resources comprised in the sub-channel whose index is $N_{subCH,n'}$ are the same as indexes of k interlaced resources comprised in a sub-channel whose index is $N_{subCH,n'}$ in the second resource block set.

14. The method according to claim 13, wherein the k interlaced resources comprised in the sub-channel whose index is $N_{subCH,n'}$ in the first resource block set are determined based on a third resource block set in the $R_{RBset}$ resource block sets.

15. The method according to claim 14, wherein the third resource block set is a resource block set at a lowest frequency domain position in the resource pool; or the third resource block set is a resource block set with a lowest resource block set index in the resource pool.

16. The method according to claim 14 or 15, wherein a sub-channel with a smallest index in the third resource block set comprises a resource block at a lowest frequency domain position in the third resource block set; or
a sub-channel with a smallest index in the third resource block set comprises an interlaced resource with a smallest index in the third resource block set.

17. The method according to any one of claims 12 to 16, wherein the mapping relationship comprises:
an index of a sub-channel to which an interlaced resource whose index is m is mapped in the resource pool or the resource block set meets the following form:

[floor((m+delta1)/k)+delta2] mod $N_{subCH}$ or [ceil((m+delta1)/k)+delta2] mod $N_{subCH}$, wherein
delta1 and delta2 are predefined, preconfigured, or configured by a network device, floor is a rounding down operation, ceil is a rounding up operation, and mod is a modulo operation.

18. The method according to claim 12, wherein the mapping relationship comprises:

for any one of the $R_{RBset}$ resource block sets, a sub-channel with a smallest index in the resource block set comprises k resource blocks with a smallest index in the resource block set; or
a sub-channel with a smallest index in the resource block set comprises k interlaced resources corresponding to k resource blocks with a smallest index in the resource block set; or
a sub-channel with a smallest index in the resource block set comprises a resource block at a lowest frequency domain position in the resource block set; or
a sub-channel with a smallest index in the resource block set comprises an interlaced resource with a smallest index in the resource block set.

19. The method according to claim 12, wherein the mapping relationship comprises: a sub-channel with a smallest index in an $R_{RBset,r}^{th}$ resource block set comprises a lowest frequency domain resource block position in the $R_{RBset,r}^{th}$ resource block set, wherein r is any integer from 0 to $R_{RBset,r}-1$.

20. The method according to claim 12 or 18, wherein for a first resource block set in the plurality of resource block sets, an index of a sub-channel to which an interlaced resource whose index is m is mapped in the first resource block set meets the following form:

$$[\text{floor}((m-m_{RBset,i}+M+N_{RB-set}^{offset})/k)+delta3] \bmod N_{subCH}; \text{ or}$$

$$[\text{ceil}((m-m_{RBset,i}+M+N_{RB-set}^{offset})/k)+delta3] \bmod N_{subCH}; \text{ or}$$

$$[\text{floor}((m-m_{\text{RBset,i}}+N_{\text{RB}-\text{set}}^{\text{offset}})/k)+\text{delta3}] \bmod N_{\text{subCH}}; \text{ or}$$

$$[\text{ceil}((m - m_{\text{RBset,i}}+N_{\text{RB}-\text{set}}^{\text{offset}})/k)+\text{delta3}] \bmod N_{\text{subCH}}, \text{ wherein}$$

an index of an interlaced resource in which a resource block with a smallest index in the first resource block set is located is $m_{\text{RBset,i}}$, $N_{\text{RB}-\text{set}}^{\text{offset}}$ and delta3 are predefined, preconfigured, or configured by a network device, floor is a rounding down operation, ceil is a rounding up operation, and mod is a modulo operation.

21. The method according to claim 12, wherein the resource pool further comprises at least one guard band, and one guard band is located between two adjacent resource block sets in the plurality of resource block sets; and a result of a modulo operation between a sum of a quantity of resource blocks comprised in the first resource block set and a quantity of resource blocks comprised in a first guard band and the quantity corresponding to the plurality of interlaces is 0; and the first guard band is a guard band that is in the at least one guard band and that is adjacent to the first resource block set.

22. The method according to any one of claims 12 to 21, wherein the first indication information further indicates P resource block sets, and a resource block comprised in the first resource is located in the P resource block sets, wherein P is an integer greater than or equal to 1.

23. A communication apparatus, comprising:

   a processing unit, configured to determine a resource pool based on configuration information, wherein the resource pool comprises $R_{RBset}$ resource block sets, $R_{RBset}$ is an integer greater than or equal to 1, one resource block set comprises $N_{subCH}$ sub-channels, one sub-channel comprises k interlaced resources, k is an integer greater than or equal to 1, and one resource block set comprises M interlaced resources; and
   a communication unit, configured to receive first indication information from a second terminal device, wherein the first indication information indicates L sub-channels comprised in a first resource, and L is an integer greater than 0; and
   the processing unit is configured to determine, based on the L sub-channels, at least one interlaced resource comprised in the first resource, wherein the at least one interlaced resource and the L sub-channels meet a mapping relationship.

24. The apparatus according to claim 23, wherein the mapping relationship comprises:

   the $R_{RBset}$ resource block sets comprise a first resource block set and a second resource block set; and
   the first resource block set comprises a sub-channel whose index is $N_{subCH,n'}$ and indexes of k interlaced resources comprised in the sub-channel whose index is $N_{subCH,n'}$ in the first resource block set are the same as indexes of k interlaced resources comprised in a sub-channel whose index is $N_{subCH,n'}$ in the second resource block set.

25. The apparatus according to claim 24, wherein the k interlaced resources comprised in the sub-channel whose index is $N_{subCH,n'}$ in the first resource block set are determined based on a third resource block set in the $R_{RBset}$ resource block sets.

26. The apparatus according to claim 25, wherein the third resource block set is a resource block set at a lowest frequency domain position in the resource pool; or the third resource block set is a resource block set with a lowest resource block set index in the resource pool.

27. The apparatus according to claim 25 or 26, wherein a sub-channel with a smallest index in the third resource block set comprises a resource block at a lowest frequency domain position in the third resource block set; or a sub-channel with a smallest index in the third resource block set comprises an interlaced resource with a smallest index in the third resource block set.

28. The apparatus according to any one of claims 23 to 27, wherein the mapping relationship comprises: an index of a sub-channel to which an interlaced resource whose index is m is mapped in the resource pool or any one of the $R_{RBset}$ resource block sets meets the following form:

[floor((m+delta1)/k)+delta2] mod $N_{subCH}$ or [ceil((m+delta1)/k)+delta2] mod $N_{subCH}$, wherein delta1 and delta2 are predefined, preconfigured, or configured by a network device, floor is a rounding down operation, ceil is a rounding up operation, and mod is a modulo operation.

29. The apparatus according to claim 23, wherein the mapping relationship comprises:

for any one of the $R_{RBset}$ resource block sets, a sub-channel with a smallest index in the resource block set comprises k resource blocks with a smallest index in the resource block set; or
a sub-channel with a smallest index in the resource block set comprises k interlaced resources corresponding to k resource blocks with a smallest index in the resource block set; or
a sub-channel with a smallest index in the resource block set comprises a resource block at a lowest frequency domain position in the resource block set; or
a sub-channel with a smallest index in the resource block set comprises an interlaced resource with a smallest index in the resource block set.

30. The apparatus according to claim 23, wherein the mapping relationship comprises: a sub-channel with a smallest index in an $R_{RBset,r}{}^{th}$ resource block set comprises a lowest frequency domain resource block position in the $R_{RBset,r}{}^{th}$ resource block set, wherein r is any integer from 0 to $R_{RBset}$-1.

31. The apparatus according to claim 23 or 29, wherein for a first resource block set in the plurality of resource block sets, an index of a sub-channel to which an interlaced resource whose index is m is mapped in the first resource block set meets the following form:

$$[\text{floor}((m-m_{RBset,i}+M+N^{offset}_{RB-set})/k)+delta3] \bmod N_{subCH};$$

or

$$[\text{ceil}((m-m_{RBset,i}+M+N^{offset}_{RB-set})/k)+delta3] \bmod N_{subCH};$$

or

$$[\text{floor}((m-m_{RBset,i}+N^{offset}_{RB-set})/k)+delta3] \bmod N_{subCH};$$

or

$$[\text{ceil}((m-m_{RBset,i}+N^{offset}_{RB-set})/k)+delta3] \bmod N_{subCH},$$

wherein
an index of an interlaced resource in which a resource block with a smallest index in the first resource block set is located is $m_{RBset,i}$, $N^{offset}_{RB-set}$ and delta3 are predefined, preconfigured, or configured by a network device, floor is a rounding down operation, ceil is a rounding up operation, and mod is a modulo operation.

32. The apparatus according to claim 23, wherein the resource pool further comprises at least one guard band, and one guard band is located between two adjacent resource block sets in the plurality of resource block sets; and a result of a modulo operation between a sum of a quantity of resource blocks comprised in the first resource block set and a quantity of resource blocks comprised in a first guard band and the quantity corresponding to the plurality of interlaces is 0; and the first guard band is a guard band that is in the at least one guard band and that is adjacent to the first resource block set.

33. The apparatus according to any one of claims 23 to 32, wherein the first indication information further indicates P resource block sets, and a resource block comprised in the first resource is located in the P resource block sets, wherein P is an integer greater than or equal to 1.

34. A communication apparatus, comprising:

a processing unit, configured to determine a first resource, wherein the first resource comprises at least one interlaced resource, the at least one interlaced resource is located in a resource pool, the resource pool comprises $R_{RBset}$ resource block sets, $R_{RBset}$ is an integer greater than or equal to 1, one resource block set comprises $N_{subCH}$ sub-channels, one sub-channel comprises k interlaced resources, k is an integer greater than or equal to 1, and one resource block set comprises M interlaced resources; and
a communication unit, configured to send first indication information to a first terminal device, wherein the first indication information indicates L sub-channels comprised in the first resource, L is an integer greater than 0, and the at least one interlaced resource and the L sub-channels meet a mapping relationship.

35. The apparatus according to claim 34, wherein the mapping relationship comprises:

the $R_{RBset}$ resource block sets comprise a first resource block set and a second resource block set; and
the first resource block set comprises a sub-channel whose index is $N_{subCH,n'}$, and indexes of k interlaced resources comprised in the sub-channel whose index is $N_{subCH,n'}$ are the same as indexes of k interlaced resources comprised in a sub-channel whose index is $N_{subCH,n'}$ in the second resource block set.

36. The apparatus according to claim 35, wherein the k interlaced resources comprised in the sub-channel whose index is $N_{subCH,n'}$ in the first resource block set are determined based on a third resource block set in the $R_{RBset}$ resource block sets.

37. The apparatus according to claim 36, wherein the third resource block set is a resource block set at a lowest frequency domain position in the resource pool; or the third resource block set is a resource block set with a lowest resource block set index in the resource pool.

38. The apparatus according to claim 36 or 37, wherein a sub-channel with a smallest index in the third resource block set comprises a resource block at a lowest frequency domain position in the third resource block set; or
a sub-channel with a smallest index in the third resource block set comprises an interlaced resource with a smallest index in the third resource block set.

39. The apparatus according to any one of claims 34 to 38, wherein the mapping relationship comprises:

an index of a sub-channel to which an interlaced resource whose index is m is mapped in the resource pool or the resource block set meets the following form:

$$[\text{floor}((m+\text{delta1})/k)+\text{delta2}] \bmod N_{subCH} \text{ or } [\text{ceil}((m+\text{delta1})/k)+\text{delta2}] \bmod N_{subCH},$$

wherein
delta1 and delta2 are predefined, preconfigured, or configured by a network device, floor is a rounding down operation, ceil is a rounding up operation, and mod is a modulo operation.

40. The apparatus according to claim 34, wherein the mapping relationship comprises:

for any one of the $R_{RBset}$ resource block sets, a sub-channel with a smallest index in the resource block set comprises k resource blocks with a smallest index in the resource block set; or
a sub-channel with a smallest index in the resource block set comprises k interlaced resources corresponding to k resource blocks with a smallest index in the resource block set; or
a sub-channel with a smallest index in the resource block set comprises a resource block at a lowest frequency domain position in the resource block set; or
a sub-channel with a smallest index in the resource block set comprises an interlaced resource with a smallest index in the resource block set.

41. The apparatus according to claim 34, wherein the mapping relationship comprises: a sub-channel with a smallest index in an $R_{RBset,r}$th resource block set comprises a lowest frequency domain resource block position in the $R_{RBset,r}$th resource block set, wherein r is any integer from 0 to $R_{RBset}$-1.

42. The apparatus according to claim 34 or 40, wherein for a first resource block set in the plurality of resource block sets, an index of a sub-channel to which an interlaced resource whose index is m is mapped in the first resource block set meets the following form:

$$[floor((m-m_{RBset,i}+M+N_{RB-set}^{offset})/k)+delta3] \ mod \ N_{subCH};$$

or

$$[ceil((m-m_{RBset,i}+M+N_{RB-set}^{offset})/k)+delta3] \ mod \ N_{subCH};$$

or

$$[floor((m-m_{RBset,i}+N_{RB-set}^{offset})/k)+delta3] \ mod \ N_{subCH};$$

or

$$[ceil((m-m_{RBset,i}+N_{RB-set}^{offset})/k)+delta3] \ mod \ N_{subCH},$$

wherein

an index of an interlaced resource in which a resource block with a smallest index in the first resource block set is located is $m_{RBset,i}$, $N_{RB-set}^{offset}$ and delta3 are predefined, preconfigured, or configured by a network device, floor is a rounding down operation, ceil is a rounding up operation, and mod is a modulo operation.

43. The apparatus according to claim 34, wherein the resource pool further comprises at least one guard band, and one guard band is located between two adjacent resource block sets in the plurality of resource block sets; and a result of a modulo operation between a sum of a quantity of resource blocks comprised in the first resource block set and a quantity of resource blocks comprised in a first guard band and the quantity corresponding to the plurality of interlaces is 0; and the first guard band is a guard band that is in the at least one guard band and that is adjacent to the first resource block set.

44. The apparatus according to any one of claims 34 to 43, wherein the first indication information further indicates P resource block sets, and a resource block comprised in the first resource is located in the P resource block sets, wherein P is an integer greater than or equal to 1.

45. A communication apparatus, comprising a processor and an interface circuit, wherein the interface circuit is configured to receive a signal from another communication apparatus and transmit the signal to the processor, or send a signal from the processor to another communication apparatus; and the processor is configured to implement the method according to any one of claims 1 to 22 through a logic circuit or by executing code instructions.

46. A computer program product, comprising instructions, wherein when the instructions are executed by a processor, the method according to any one of claims 1 to 22 is implemented.

47. A chip, comprising a processor, wherein the processor is coupled to a memory, and is configured to execute a computer program or instructions stored in the memory, to enable the chip to implement the method according to any one of claims 1 to 22.

48. A computer-readable storage medium, wherein the storage medium stores a computer program or instructions, and when the computer program or the instructions are executed by a communication apparatus, the method according to any one of claims 1 to 22 is implemented.

FIG. 1(a)

FIG. 1(b)

FIG. 1(c)

Resource pool #1

Guard band

RB set #1 — Channel #1

Guard band

RB set #2 — Channel #2

Guard band

FIG. 2

Resource pool #2

Guard band

RB set #1 — Channel #3

Guard band

FIG. 3

FIG. 4

FIG. 5

Second terminal device

First terminal device

S601: The first terminal device determines, based on configuration information, that a resource pool includes $R_{RBset}$ resource block sets

S602: The second terminal device sends first indication information to the first terminal device

First indication information

S603: The first terminal device determines, based on L sub-channels, at least one interlaced resource included in a first resource

FIG. 6

| | RB set 0 | | | | | | | | | | | | Guard band | | | | | | RB set 1 | | | | | | | | | | | | | |
|---|---|---|---|---|---|---|---|---|---|---|---|---|---|---|---|---|---|---|---|---|---|---|---|---|---|---|---|---|---|---|---|---|---|
| RB index | 0 | 1 | 2 | 3 | 4 | 5 | 6 | 7 | 8 | 9 | ... | ... | 49 | 50 | 51 | 52 | 53 | 54 | 55 | 56 | 57 | 58 | 59 | 60 | 61 | 62 | 63 | 64 | 65 | ... | ... | 105 |
| Interlaced resource index | 0 | 1 | 2 | 3 | 4 | 0 | 1 | 2 | 3 | 4 | ... | ... | 4 | 0 | 1 | 2 | 3 | 4 | 0 | 1 | 2 | 3 | 4 | 0 | 1 | 2 | 3 | 4 | 0 | ... | ... | 0 |
| Sub-channel index | 0 | 1 | 2 | 3 | 4 | 0 | 1 | 2 | 3 | 4 | ... | ... | 4 | | | | | | | 1 | 2 | 3 | 4 | 0 | 1 | 2 | 3 | 4 | 0 | ... | ... | 0 |

FIG. 7

| | RB set 0 | | | | | | | | | | | | Guard band | | | | | | RB set 1 | | | | | | | | | | | | |
|---|---|---|---|---|---|---|---|---|---|---|---|---|---|---|---|---|---|---|---|---|---|---|---|---|---|---|---|---|---|---|---|---|
| RB index | 0 | 1 | 2 | 3 | 4 | 5 | 6 | 7 | 8 | 9 | ... | ... | 49 | 50 | 51 | 52 | 53 | 54 | 55 | 56 | 57 | 58 | 59 | 60 | 61 | 62 | 63 | 64 | 65 | ... | ... | 105 |
| Interlaced resource index | 0 | 1 | 2 | 3 | 4 | 0 | 1 | 2 | 3 | 4 | ... | ... | 4 | 0 | 1 | 2 | 3 | 4 | 0 | 1 | 2 | 3 | 4 | 0 | 1 | 2 | 3 | 4 | 0 | ... | ... | 0 |
| Sub-channel index | 4 | 0 | 1 | 2 | 3 | 4 | 0 | 1 | 2 | 3 | ... | ... | 3 | | | | | | | 0 | 1 | 2 | 3 | 4 | 0 | 1 | 2 | 3 | 4 | ... | ... | 1 |

FIG. 8

RB set 0 | Guard band | RB set 1

| RB index | 0 | 1 | 2 | 3 | 4 | 5 | 6 | 7 | 8 | 9 | ... | ... | 104 | 105 | 106 | 107 | 108 | 109 | 110 | 111 | 112 | 113 | 114 | 115 | 116 | 117 | 118 | 119 | 120 | ... | ... | 214 |
|---|---|---|---|---|---|---|---|---|---|---|---|---|---|---|---|---|---|---|---|---|---|---|---|---|---|---|---|---|---|---|---|---|
| Interlaced resource index | 3 | 4 | 5 | 6 | 7 | 8 | 9 | 0 | 1 | 2 | ... | ... | 7 | 8 | 9 | 0 | 1 | 2 | 3 | 4 | 5 | 6 | 7 | 8 | 9 | 0 | 1 | 2 | 3 | ... | ... | 7 |
| Sub-channel index | 0 | 0 | 1 | 1 | 2 | 2 | 3 | 3 | 4 | 4 | ... | ... | 2 | | | | | | | 0 | 1 | 1 | 2 | 2 | 3 | 3 | 4 | 4 | 5 | ... | ... | 2 |

FIG. 9

EP 4 679 922 A1

EP 4 679 922 A1

| | RB set 0 | | | | | | | | | | | Guard band | | | | | | RB set 1 | | | | | | | | | | | |
|---|---|---|---|---|---|---|---|---|---|---|---|---|---|---|---|---|---|---|---|---|---|---|---|---|---|---|---|---|---|---|
| RB index | 0 | 1 | 2 | 3 | 4 | 5 | 6 | 7 | 8 | 9 | ... ... | 49 | 50 | 51 | 52 | 53 | 54 | 55 | 56 | 57 | 58 | 59 | 60 | 61 | 62 | 63 | 64 | 65 | ... ... | 105 |
| Interlaced resource index | 0 | 1 | 2 | 3 | 4 | 0 | 1 | 2 | 3 | 4 | ... ... | 4 | 0 | 1 | 2 | 3 | 4 | 0 | 1 | 2 | 3 | 4 | 0 | 1 | 2 | 3 | 4 | 0 | ... ... | 0 |
| Sub-channel index | 0 | 1 | 2 | 3 | 4 | 0 | 1 | 2 | 3 | 4 | ... ... | 4 | | | | | | | 0 | 1 | 2 | 3 | 4 | 0 | 1 | 2 | 3 | 4 | ... ... | 1 |

FIG. 10

FIG. 11

Resource pool

| RB set 0 | Guard band | RB set 1 |
|---|---|---|
| 104 RBs | 6 RBs | 106 RBs |

Frequency domain

FIG. 12

1300

Processing unit — 1301

Communication unit — 1302

FIG. 13

Communication apparatus 1400

| Processor 1410 | Interface circuit 1420 | Memory 1430 |

FIG. 14

FIG. 15

EP 4 679 922 A1

**INTERNATIONAL SEARCH REPORT**

| International application No. |
|---|
| **PCT/CN2024/082506** |

| A. | CLASSIFICATION OF SUBJECT MATTER |
|---|---|

H04W 72/40(2023.01)i

According to International Patent Classification (IPC) or to both national classification and IPC

| B. | FIELDS SEARCHED |
|---|---|

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 资源, 资源池, 指示, 确定, 资源块集合, 子信道, 交错, 交织, 映射, 关系, 索引, 侧链路, 旁链路, 边链路, resource, resource pool, indication, indicator, RB-set, subchannel, sub-channel, interlace, mapping, relation, index, sidelink, SL-U

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115835394 A (BEIJING UNISOC COMMUNICATION TECHNOLOGY CO., LTD.) 21 March 2023 (2023-03-21)<br>description, paragraphs [0112]-[0137] | 1-48 |
| A | CN 114208097 A (SHARP CORP.) 18 March 2022 (2022-03-18)<br>entire document | 1-48 |
| A | CN 115767467 A (BEIJING UNISOC COMMUNICATION TECHNOLOGY CO., LTD.) 07 March 2023 (2023-03-07)<br>entire document | 1-48 |
| A | US 2023028000 A1 (SAMSUNG ELECTRONICS CO., LTD.) 26 January 2023 (2023-01-26)<br>entire document | 1-48 |
| A | ERICSSON. "PHY channel design framework for SL-U"<br>*3GPP TSG RAN WG1 #112. R1-2301839*, 03 March 2023 (2023-03-03),<br>entire document | 1-48 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 May 2024** | **22 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/082506**

| Patent document cited in search report | | | Publication date (day/month/year) | Patent family member(s) | | | Publication date (day/month/year) |
|---|---|---|---|---|---|---|---|
| CN | 115835394 | A | 21 March 2023 | None | | | |
| CN | 114208097 | A | 18 March 2022 | US | 2022353900 | A1 | 03 November 2022 |
| | | | | WO | 2021029437 | A1 | 18 February 2021 |
| CN | 115767467 | A | 07 March 2023 | None | | | |
| US | 2023028000 | A1 | 26 January 2023 | EP | 4356670 | A1 | 24 April 2024 |
| | | | | KR | 20240035475 | A | 15 March 2024 |
| | | | | WO | 2023003221 | A1 | 26 January 2023 |
| | | | | CN | 117716773 | A | 15 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310411085